# EUROPEAN PATENT APPLICATION

(11) **EP 1 898 569 A1**
(43) Date of publication of application: **12.03.2008**
(21) Application number: 06780701.6
(22) Date of filing: 30.06.2006
(51) Int. Cl.: H04L 12/56

(54) **MOBILE COMMUNICATION CONTROL METHOD, DATA COMMUNICATION DEVICE, MOBILE BASE STATION, AND MOBILE TERMINAL**

(30) Priority: 30.06.2005 JP 2005192533; 28.06.2006 JP 2006178397
(71) Applicant: Matsusita Electric Industrial Co., Ltd., Kadoma-shi, Osaka 571-8501 (JP)
(72) Inventor: KAWAKAMI, Tetsuya Matsushita Electric Industrial Co.,Ltd, Chuo-ku, Osaka-shi, Osaka 540-6207 (JP)
(74) Representative: Pautex Schneider, Nicole Véronique
(86) International application number: PCT/JP2006/313144
(87) International publication number: WO 2007/004586

(57) **Abstract**

Disclosed is a technique which reduces the packet loss and the band consumption for data transfer when a mobile terminal conducts the handover between a fixed base station and a mobile base station for group movement. According to this technique, when an MH (mobile terminal) 320 conducts the handover from a fixed base station (E-LSR 230) positioned at an edge of an access network 200 to a mobile base station (MEB 310) located in a train or the like, a predetermined flag is appended to a frame addressed to the MH in a label switching router (P-LSR 210) positioned at a core network 100 side edge of the access network. The frame having the appended flag is copied in the E-LSR 230. One frame after copied is transmitted directly from the E-LSR to the MH while the other frame after copied is transferred from the E-LSR to the MEB and then transmitted from the MEB to the MH, thus realizing the soft handover.

## Description

### TECHNICAL FIELD

The present invention relates to a mobile communication control method, data communication device, mobile base station, and mobile terminal in a mobile IP (Internet Protocol) communication network, and more particularly to a mobile communication control method, data communication device, mobile base station, and mobile terminal which are designed to realize soft handover control in a case in which a plurality of communication terminals move simultaneously by means of a train or the like in a core network and an access network for the connections of communication terminals thereto.

### BACKGROUND ART

So far, in mobile communications, the execution of handover control for the continuation of communication is essential even when a communication terminal changes the base station. For this reason, also in the IP communications, a mobile IP has been studied as a protocol for the mobile control on a mobile terminal (see the following Non-Patent Document 1).

However, for example, in a case in which a large number of users each carrying a communication terminal take a ride in/on a mobile object (for example, railway train, bus, ship, aircraft and others) or in the other cases, if the simultaneous execution of the handover control is conducted with respect to each movement of all the communication terminals existing within the mobile object, it is extremely inefficient because of the same moving route. Accordingly, as a method of executing the mobile control efficiently in a case in which an unspecified number of communication terminals move simultaneously, for example, there has been proposed the NEMO (Network Mobility) disclosed in the following Non-Patent Document 2.

According to the NEMO disclosed in the Non-Patent Document 2, an unspecified number of communication terminals which move simultaneously operate as a single group. Concretely, in the case of the NEMO, an MR (Mobile Router) is located within a mobile object so that each of the communication terminals within the mobile object establishes a connection with a network (mobile network) under this MR. Moreover, for this MR to entirely carry out the actual mobile control, each of the communication terminals under the MR is always placed into a state connected to the network under the same MR, which eliminates the need for each of the communication terminals to individually execute the mobile control.

On the other hand, for the countermeasures against the packet loss at the handover of a communication terminal, there have been proposed soft handover methods disclosed in the following Non-Patent Documents 3 and 4. For example, in the Non-Patent Document 3, a bicast technique is utilized for the soft handover method. That is, a communication terminal which is currently in connection with an AR (Access Router) #1 and is making a communication using a CoA Care-of Address) #1 fitting for an access network under the AR #1 grasps, before the movement, a network prefix of an access network under a new AR #2 which is a movement destination, thereby generating a CoA #2 fitting for the access router under the AR #2 and advertising this CoA #2 to its own HA (Home Agent) or a CN (Correspondent Node: communication partner terminal). Thus, At the transmission of packets to the communication terminal, the HA or CN transmits packets directed to the CoA #1 and the CoA #2 as destination addresses, and the packets are transmitted through a plurality of ARs (AR #1 and AR #2) to the communication terminal so that the communication terminal can receive these plural packets selectively.

In addition, in the Non-Patent Document 4, an Xcast (Explicit Multicast) technique is applied for the soft handover method. According to the technique disclosed in this Non-Patent Document 4, combined with the technique disclosed in the aforesaid Non-Patent Document 3, a sender (i.e., HA or CN) which transmits a packet to a communication terminal inserts a plurality of CoAs (CoA #1 and CoA #2) into a routing header of the packet, which enables reducing packet duplicate routes and realizing efficient packet transfer.

Meanwhile, for example, the following Non-Patent Documents 5 and 6 disclose techniques for reducing the processing on the change of an IP address which probably takes place frequently at the movement of a communication terminal in an access network which makes a connection between a core network (external IP network: including the internet) and the communication network. According to these Non-patent Documents 5 and 6, the mobile control is executed utilizing route control based on a layer-2 tunnel.

Moreover, for the layer-2 packet transfer in the access network disclosed in the Non-Patent Documents 5 and 6, for example, the MPLS (Multi-Protocol Label Switching) disclosed in the following Non-Paten Document 7 is available. In the case of the MPLS, an access network is configured by a router (LSR: Label Switching Router) handling a label switchingmethod and identification information referred to as a label for the identification of a route is appended to a packet to be transmitted in the interior of the access network. This enables the LSR to transfer a packet on the basis of the label within the access network. In particular, this can lighten the processing load on the route calculation and realize an increase in the speed of the packet transfer processing.

In addition, the following Non-Patent Document 8 discloses a format related to a label to be used in the MPLS.

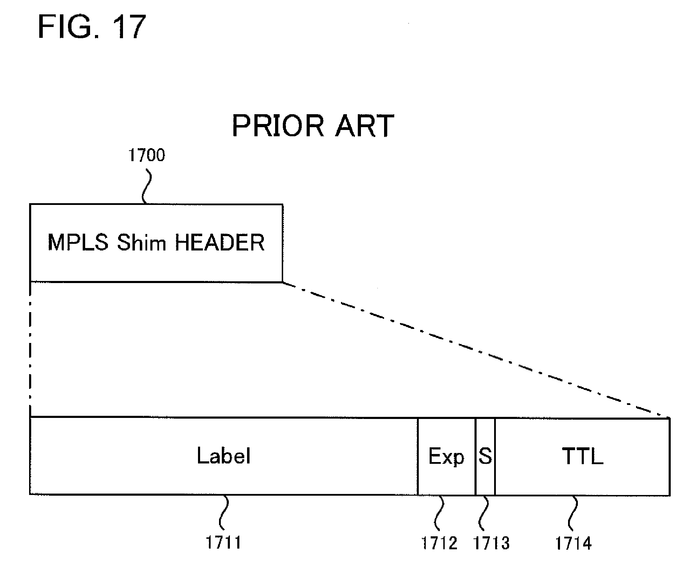

FIG. 17 is an illustration of a format related to a label for use in the MPLS according to a conventional technique. In the case of the MPLS, an MPLS shim header 1700 is provided between a layer-2 header and a layer-3 header, and a label is inserted into this MPLS shim header 1700. Concretely, the MPLS shim header 1700 contains a 20-bit label field 1711 for the insertion of a label value, a 3-bit Exp field 1712 capable of indicating, for example, a CoS (Class of Service), a 1-bit S field 1713 for indicating a stack of the label and an 8-bit TTL field 1714 for indicating a term of validity of a packet (TTL : Time to Live).
Non-Patent Document 1 : D. B. Johnson, C. E. Perkins and J. Arkko, "Mobility Support in IPv6", IETF RFC3775, June 2004.
Non-Patent Document 2 : V. Devarapalli, R. Wakikawa, A. Petrescu and P. Thubert, "NetworkMobility (NEMO) Basic Support Protocol" , IETF RFC3963, January 2005.
Non-Patent Document 3 : T. Park andA. Dadej, "Adaptive Handover Control in IP-based Mobility Networks" , 2003.
Non-Patent Document 4 : Yutaka Ezaki and Yuji Imai, "Mobile IPv6 handoff by Explicit Multicast" <internet-draft:draft-ezaki-handoff-xcast-01.txt>, May 2001.
Non-Patent Document 5 : Tetsuya Kawakami, Satoshi Iino and Yoshihiro Suzuki "Study of Mobility Control in Broad-band Ethernet", Institute of Electronics, Information and Communication, IA Study Group Paper, October 2002.
Non-Patent Document 6 : Tetsuya Kawakami, Michiru Yokobori and Yoshihiro Suzuki "Study of Mobility Control Method for Next-Generation Mobile Communications", Institute of Electronics, Information and Communication, IN Study Group Paper, February 2005.
Non-Patent Document 7 : E. Rosen, A. Viswanathan and R. Callon, "Multiprotocol Label Switching Architecture", IETF RFC3031, January 2001.
Non-Patent Document 8 : E. Rosen, D. Tappan, G. Fedorkow, Y. Rekhter, D. Farinacci, T. Li and A. Conta, "MPLS Label Stack Encoding" , IETF RFC3032, January 2001.

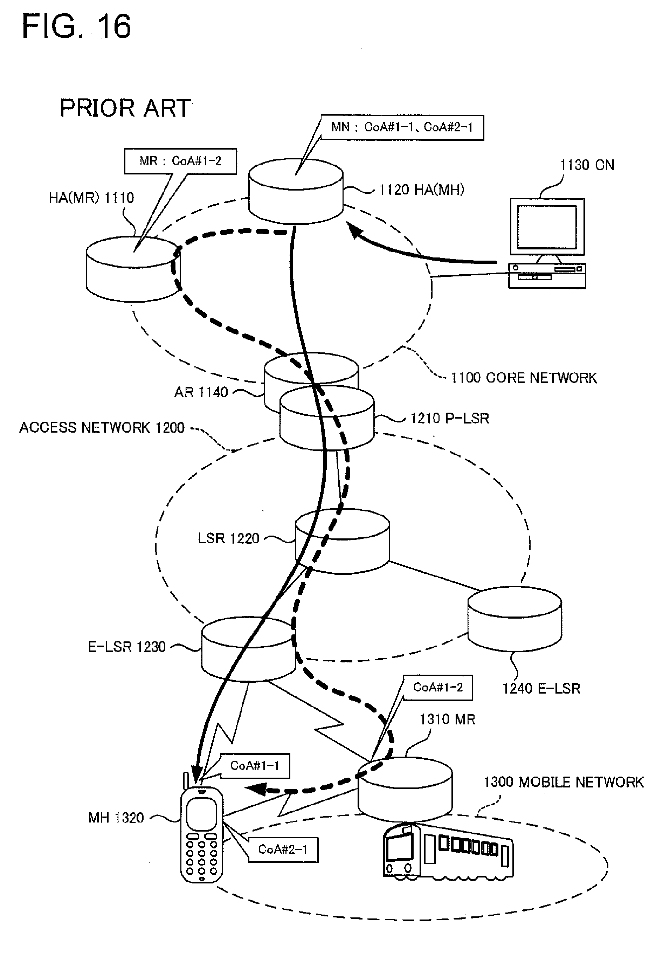

Referring to FIG. 16, a description will be given hereinbelow of, in a network configuration disclosed in the aforesaid Non-Patent Document 5 or 6, the outline of the processing utilizing the NEMO disclosed in the aforesaid Non-Patent Document 1. FIG. 16 is an illustration of one example of a network configuration according to a conventional technique.

FIG. 16 shows a state in which an access network 1200 is connected to a core network 110 and an MH (Mobile Host: mobile terminal) 1320 connected through wireless means to the access network 120 makes a communication with a CN 1130 connected to the core network 110. Let it be assumed that the access network 1200 is tunneled from a P-LSR 1210 positioned at an edge (core network 110 side edge) of the access network 1200 to an E-LSR 1230 positioned an edge (connection side of MH 1320) of the same access network 1200 through the use of, for example, the EoMPLS (Ethernet(R) over MPLS).

At this time, the MH 1320 acquires a CoA #1-1 from an AR 1140 through the E-LSR which is a base station with which it is currently in connection to make a communication. Moreover, in a case in which an MR 1310 located in a train or the like moves into a radio communication area of the E-LSR 1230, the MR 1310 establishes a connection with the E-LSR 1230 with which the MH 1320 is in connection and acquires a CoA #1-2 from the AR 1140 to make a communication. In consequence, the CoA #1-2 is registered in a home agent (HA (MR) 1110) of the MR 1310.

On the other hand, in a case in which the MH 1320 further enters the radio communication area of the MR 1310, the MH 1320 acquires a CoA (CoA #2-1) adaptable to a mobile network 1300 from the MR 1310 and advertises this CoA #2-1 to its own home agent (HA (MH) 1320). As a result, two CoAs (CoA #1-1 and CoA #2-1) are registered in the HA (MH) 1120.

Let us consider a case of realizing the Bicast-based soft handover disclosed in the aforesaid Non-Patent Document 3 by use of these CoA #101 and CoA #2-1. In this case, basically, the soft handover is realizable by transmitting packets having different destinations. That is, the P-LSR 1210 judges that a packet transmitted to the CoA #1-1 is addressed to the MH 1320. Moreover, in the access network 1200, it is transferred from the P-LSR 1210 to the E-LSR 1230 through the use of an LSP #1 and then transferred from the E-LSR 1230 to the MH 1320. That is, the packet transmitted to the CoA #1-1 reaches the MH 1320 by way of a route indicated by a solid line in FIG. 16.

On the other hand, a packet transmitted to the CoA #2-1 is once transferred to the HA (MR) 1110 and then encapsulated by the CoA #1-2 of the MR 1310 and transmitted toward the MR 1310. In the P-LSR 1210, a judgment is made that this packet is addressed to the MR 1310, and in the access network 1200, it is transferred from the P-LSR 1210 to the E-LSR 1230 through the use of an LSP #2 which is a route different from the above-mentioned LSP #1. Following this, it is transferred from the E-LSR 1230 to the MR 1310 and then encapsulated in the MR 1310 before transferred to the MH 1320. That is, the packet transmitted to the CoA #2-1 reaches the MH 1320 by way of a route indicated by a dotted line in FIG. 16.

Thus, in a case in which the group movement management on the MR 1320 is made on the basis of the NEMO, for example, when the MH 1320 carries out the soft handover between a radio base station (E-LSR 1230) with which the MR 1310 is in connection and the MR 1310, there arises a problem in that the packet transfer is made through the use of two LSPs different from each other. That is, a problem exists in that, when the MH 1320 performs the soft handover, the packets having the same contents are transferred in a state duplicated in a route from the P-LSR 1210 to the E-LSR 1230, which leads to using the band doubly.

In addition, this problem also applies to a case using the Xcast disclosed in the aforesaid Non-Patent Document 4. This is because, when a packet from one CN is subjected to the Xcast, different destinations are set for a plurality of packets undergoing the Xcast irrespective of being finally transferred to the same MH 1320. That is, with respect to the AR 1140, packets having different destination IP addresses are transferred by frames (data units) having different destinationMAC addresses, respectively, andatanedgeportion (P-LSR 1210) of the access network 1200, both the MAC addresses and IP addresses are different among the packets having the same contents and, hence, a judgment is made as another packets (packets unrelated to each other). This causes a plurality of packets having the same contents are transferred to the MH 1320 through the use of the LSPs corresponding to the respective destinations, so the duplicate packet transfer take place in the access network 1200. Moreover, with respect to the P-LSR 1210, in a case in which the packets are different in both the MAC addresses and IP addresses from each other, the implementation of a judgment on whether or not they are packets to be transferred to the same destination results in a high processing load, so difficulty is experienced in implementing it.

### DISCLOSURE OF THE INVENTION

In consideration of the above-mentioned problems, it is an object of the present invention to provide a mobile communication control method, data communication device, mobile base station, and mobile terminal capable of reducing the packet loss and band consumption due to data transfer when a mobile terminal carries out the handover between a fixed base station and a mobile base station for group movement.

For achieving the above-mentioned purpose, a mobile communication control method according to the present invention in a mobile communication control system including, in a case in which an access network is formed so that a mobile terminal establishes a connection with a core network, a first edge communication apparatus positioned at an edge of the access network and connected to the core network and a second edge communication apparatus positioned at an edge of the access network and accommodating the mobile terminal, with the mobile terminal accommodated in the second edge communication apparatus being connected through the first edge communication apparatus and the second edge communication apparatus to the core network, comprising:
a mobile base station accommodating step in which the second edge communication apparatus accommodates a mobile base station capable of accommodating a mobile terminal as its own subordinate;
a connection relation grasping step in which the first edge communication apparatus grasps a connection switching start timing and a connection switching end timing by the mobile terminal which switches a connection between the second edge communication apparatus and the mobile base station;
a flag adding step in which, within a period of time between the connection switching start timing and the connection switching end timing by the mobile terminal, the first edge communication apparatus adds a predetermined flag to a data unit transmitted from an arbitrary communication apparatus, connected to the core network, toward the mobile terminal; and
a data unit duplicating step in which, upon receipt of the data unit having the added predetermined flag, the second edge communication apparatus duplicates the data unit and directly transmits one of the data units, obtained by the duplication, to the mobile terminal serving as its own subordinate while transmitting the other duplicated data unit through the mobile base station to the mobile terminal.
The above-mentioned arrangement enables a reduction of packet loss and band consumption for data transfer when a mobile terminal carries out the handover between a fixed base station and a mobile base station for group movement.

In addition, combined with the above-mentioned mobile communication control method, the mobile communication control method according to the present invention further comprises an encapsulation step in which the first edge communication apparatus encapsulates the data unit, addressed to the mobile terminal capable of receiving the data unit through the mobile base station, with a header addressed to the mobile base station,
wherein, in the data unit duplicating step, upon receipt of the data unit having the added flag, the second edge communication apparatus duplicates the encapsulated data unit and, after decapsulating one of the duplicated data units, transmits the decapsulated data unit directly to the mobile terminal serving as its own subordinate while transmitting the other duplicated data unit directly to the mobile base station.
With the above-mentioned arrangement, a data unit is transferred to a mobile base station and is duplicated in an edge communication apparatus accommodating a mobile terminal, thus realizing the soft handover of the mobile terminal.

Still additionally, combined with the above-mentioned mobile communication control method, the mobile communication control method according to the present invention further comprises a data unit transmitting step in which the first edge communication apparatus transmits the data unit, to which the predetermined flag is added in the flag adding step, through a tunnel whose end point is the mobile base station,
wherein, in the data unit duplicating step, the second edge communication apparatus transfers the data unit having the added predetermined flag and transmitted through the tunnel toward the end point of the tunnel and refers to a destination IP address included in the data unit for transmitting the data unit directly to the mobile terminal serving as its own subordinate.
This arrangement enables a reduction of a frame overhead in the interior of an access network at the soft handover.

Yet additionally, combined with the above-mentioned mobile communication control method, in the mobile communication control method according to the present invention, the transfer of the data unit in the access network is made according to a label switching method and, in the access network, the data unit having the added predetermined flag utilizes a path for transfer of a data unit to the mobile base station.
With this arrangement, the soft handover of a mobile terminal is realizable by using only a single path for label switching for use in an access network.

Moreover, combined with the above-mentioned mobile communication control method, in the mobile communication control method according to the present invention, in the aforesaid flag adding step, the predetermined flag is added to a header for label switching.
This arrangement enables suppressing an increase of overhead due to the addition of a predetermined flag by utilizing a conventional header for the label switching, and further allows reliably carrying out a data unit duplication instruction using the predetermined flag.

Furthermore, for achieving the above-mentioned purpose, a mobile communication control method according to the present invention in a mobile communication control system including, in a case in which an access network is formed so that a mobile terminal establishes a connection with a core network, a first edge communication apparatus positioned at an edge of the access network and connected to the core network and a second edge communication apparatus positioned at an edge of the access network and accommodating the mobile terminal, with the mobile terminal accommodated in the second edge communication apparatus being connected through the first edge communication apparatus and the second edge communication apparatus to the core network, comprising:
a mobile base station accommodating step in which the second edge communication apparatus accommodates a mobile base station capable of accommodating a mobile terminal as its own subordinate;
a prefix advertising step in which the second edge communication apparatus advertises a prefix identical to a prefix for specifying the access network to its own subordinate;
a common tunnel transferring step in which, in the access network from the first edge communication apparatus to the second edge communication apparatus, the first edge communication apparatus transfers the data unit, which passes through the second edge communication apparatus, through the same tunnel;
a connection relation grasping step in which the second edge communication apparatus grasps a connection switching start timing and a connection switching end timing by the mobile terminal which switches a connection between the second edge communication apparatus and the mobile base station; and
a data unit duplicating step in which, between the connection switching start timing and the connection switching end timing by the mobile terminal, the second edge communication apparatus duplicates the data unit addressed to the mobile terminal and directly transmits one of the duplicated data units to the mobile terminal serving as a subordinate while transmitting the other duplicated data unit through the mobile base station to the mobile terminal.
The above-mentioned arrangement enables a reduction of packet loss and band consumption for data transfer when a mobile terminal carries out the handover between a fixed base station and a mobile base station for group movement.

Still furthermore, for achieving the above-mentioned purpose, a data communication device according to the present invention which is in connection with a core network and which is positioned at an edge of an access network for connecting a mobile terminal to the core network, comprises:
positional information storing means for storing information indicative of positional relationship between an edge communication apparatus positioned at an edge of the access network and capable of accommodating the mobile terminal and a mobile terminal existing under the edge communication apparatus or a mobile base station existing under the edge communication apparatus and capable of accommodating the mobile terminal as its own subordinate;
data unit receiving means for receiving a data unit transmitted from an arbitrary communication apparatus, connected to the core network, to the mobile terminal;
flag adding means for referring to the information indicative of the positional relationship stored in the positional information storing unit to add, to the data unit, a predetermined flag indicative of an instruction for a duplication of the data unit to the edge communication apparatus in a case in which the mobile terminal exists at a position where the data unit is receivable from both the edge communication apparatus and the mobile base station; and
data unit transmitting means for transmitting the data unit, to which the predetermined flag is added by the flag adding means, to the edge communication apparatus.
With this configuration, at the soft handover of a mobile terminal, a data communication device positioned at an edge of an access network and connected to a core network can give an instruction for duplication of a data unit, which is for realizing the soft handover, to an edge communication apparatus positioned an edge of the access network and accommodating the mobile terminal.

In addition, combined with the above-mentioned data communication device, the data communication device according to the present invention further comprises:
mobile base station subordinate judging means for referring to the information indicative of the positional relationship stored in the positional information storing unit so as to make a judgment as to whether or not the mobile terminal exists under the mobile base station; and
encapsulation means for, when the judgment by the mobile base station subordinate judging means shows that the mobile terminal exists under the mobile base station, making an encapsulation with a header addressed to the mobile base station.
With this configuration, a data unit is transferred to a mobile base station, and the data unit is duplicated in an edge communication apparatus accommodating a mobile terminal, thereby realizing the soft handover of the mobile terminal.

Still additionally, combined with the above-mentioned data communication device, in the data communication device according to the present invention, the data unit transmitting means is made to transmit the data unit, to which the predetermined flag is added by the flag adding means, through a tunnel whose end point is the mobile base station.
With the above-mentioned configuration, in a manner such that a data unit having an address of a mobile terminal as a destination IP address is transmitted through a tunnel whose end point is a mobile base station, a data communication device positioned at a terminal side edge of an access network can duplicate the data unit and transfer the data packet to both the tunnel end point and the destination IP address.

Yet additionally, combined with the above-mentioned data communication device, in a case in which the transfer of the data unit within the access network is made according to a label switching method, the data communication device according to the present invention further comprises label adding means for adding, to the data unit, a label whereby the data unit is transferred to the edge communication apparatus within the access network.
With this configuration, the soft handover of a mobile terminal is realizable by using only single path for label switching for use in an access network.

Furthermore, for achieving the above-mentioned purpose, a data communication device according to the present invention which is positioned at an edge of an access network for connecting a mobile terminal to a core network and which is capable of accommodating the mobile terminal, comprises:
a mobile base station capable of accommodating the mobile terminal as its own subordinate or radio communication apparatus accommodating means capable of accommodating the mobile terminal;
data unit receiving means for receiving a data unit from the access network;
data duplicating means for, when receiving a data unit to which the predetermined flag to be added when a judgment shows that the mobile terminal exists at a position where the data unit is receivable from both the edge communication apparatus and the mobile base station is added by a data communication device positioned at an edge of the access network and connected to the core network, duplicating the data unit; and
data unit transmitting means for directly transmitting one of the data units obtained by the duplication by the data duplicating means to the mobile terminal serving as its own subordinate and transmitting the other duplicated data unit to the mobile base station.
With this configuration, at the soft handover of a mobile terminal, a data communication device positioned at an edge of an access network and accommodating the mobile terminal can make a determination as to whether or not to duplicate a data unit for the realization of the soft handover by referring to the presence or absence of a predetermined flag added to the data unit by an edge communication apparatus positioned at an edge of the access network and connected to a core network.

Moreover, combined with the above-mentioned data communication device, the data communication device according to the present invention further comprises decapsulationmeans for, in a state where the data unit having the added predetermined flag is encapsulated with a header addressed to the mobile base station, carrying out decapsulation on the header addressed to the mobile base station with respect to the one data unit duplicated by the data duplicating means.
With this configuration, a data unit is transferred to a mobile base station, and the data unit is duplicated in an edge communication apparatus accommodating a mobile terminal, thereby realizing the soft handover of the mobile terminal.

Still moreover, combined with the above-mentioned data communication device, in the data communication device according to the present invention, the one data unit duplicated by the data duplicating means is transmitted to a destination address specified by the predetermined flag while the other duplicated data unit is transmitted to a destination address derived from a destination IP address included in the data unit.
With the above-mentioned configuration, a data packet to which a predetermined appended can be duplicated and transferred to both a tunnel end point and a destination IP address.

Furthermore, for achieving the above-mentioned purpose, a mobile base station according to the present invention which is movable and made to carry out the processing on a layer-2 level data unit, comprises:
radio communication means connectable through radio communication to a base station positioned at an edge of an access network for a connection with a core network;
radio communication apparatus accommodating means capable of accommodating a mobile terminal;
decapsulation means for, when receiving, through the radio communication means, an encapsulated data unit made in a manner such that a data unit addressed to the mobile terminal accommodated in the radio communication apparatus accommodating means is encapsulated with a header addressed to the mobile base station itself, decapsulating the encapsulated data unit; and
data transmitting means for transmitting the data unit, obtained by the decapsulation means and addressed to the mobile terminal, to the mobile terminal.
With the above-mentioned configuration, a mobile base station designed to carry out the processing on a layer-2 level data unit can transmit a data unit to a mobile terminal serving as a subordinate by carrying out the decapsulation and transfer of the received data unit.

In addition, combined with the above-mentioned mobile base station, the mobile base station according to the present invention further comprises beacon transmitting means for transmitting, to a subordinate, a beacon including its own identification information, information indicative of the fact that it is movable and identification information on the base station accommodating it.
With this configuration, particularly, the information on the fact that it is movable and on a parent base station with which a mobile base station is in connection can be advertised to a mobile terminal serving as a subordinate.

Furthermore for achieving the above-mentioned purpose, a mobile terminal according to the present invention which is movable comprises:
radio communication means connectable through radio communication to a base station;
beacon information judging means for, when newly receiving a beacon from a second base station through the use of the radio communication means in a state accommodated in a first base station, referring to identification information on a base station accommodating the second base station, included in the beacon received from the second base station, and making a judgment as to whether or not the first base station and the second base station are identical to each other; and
message transmitting means for, when the judgment in the beacon information judging means shows that the first base station and the secondbase station are identical to each other, transmitting, to the first base station, a message including its own identification information and identification information on the second base station as a request for allowing a data unit addressed to it to be duplicated in the first base station and receivable from both the first base station and the second base station.
With this configuration, with respect to two base stations, when a parent base station of one base station and the other base station are identical to each other, a mobile terminal can make a request for the soft handover.

The present invention has the above-described configurations and provides an advantage of reducing packet loss and band consumption for data transfer in a case in which a mobile terminal conducts the handover between a fixed base station and a mobile base station for group movement.

### BRIEF DESCRIPTION OF THE DRAWINGS

FIG. 1 is an illustration of one example of a network configuration according to a first embodiment of the present invention;
FIG. 2 is an illustration of one example of a format of a frame according to the first embodiment of the present invention in a case in which an MH is in connection with only a fixed base station (E-LSR);
FIG. 3 is an illustration of one example of a format of a frame according to the first embodiment of the present invention in a case in which an MH is in connection with a mobile base station (MEB);
FIG. 4 is an illustration of one example of a format of an MPLS Shim header in FIG. 2 and FIG. 3;
FIG. 5 is an illustrative view showing a tunnel for a frame to be transmitted within an access network according to the first embodiment of the present invention;
FIG. 6 is a block diagram showing one example of a configuration of a P-LSR according to the first embodiment of the present invention;
FIG. 7 is a block diagram showing one example of a configuration of an E-LSR according to the first embodiment of the present invention;
FIG. 8 is a block diagram showing one example of a configuration of an MEB according to the first embodiment of the present invention;
FIG. 9 is a block diagram showing one example of a configuration of an MH according to the first embodiment of the present invention;
FIG. 10 is an illustrative view showing the contents of a beacon to be transmitted from a fixed base station (E-LSR) according to the first embodiment of the present invention;
FIG. 11 is an illustrative view showing the contents of a beacon to be transmitted from a mobile base station (MEB) according to the first embodiment of the present invention;
FIG. 12 is a sequence chart showing one example of an operation according to the first embodiment of the present invention until a soft handover state takes place in a case in which an MH changes connection from an E-LSR to an MEB;
FIG. 13 is a sequence chart showing one example of an operation according to the first embodiment of the present invention to be conducted when an MH which is in a soft handover state switches connection to a single base station;
FIG. 14 is a sequence chart showing one example of an operation according to the first embodiment of the present invention until a soft handover state takes place in a case in which an MH changes connection from an MEB to an E-LSR;
FIG. 15 is an illustration of one example of a transfer-destination management table to be stored in a P-LSR according to the first embodiment of the present invention;
FIG. 16 is an illustration of one example of a network configuration according to a convention technique;
FIG. 17 is an illustration of a format related to a label to be used for an MPLS according to a conventional technique;
FIG. 18 is an illustration of one example of a network configuration according to a second embodiment of the present invention;
FIG. 19 is an illustration of one example of a format of a frame to be transmitted an MAP according to the second embodiment of the present invention;
FIG. 20 is an illustration of one example of a transfer-destination management table to be stored in an AR positioned at a terminal side edge of an access network according to a third embodiment of the present invention;
FIG. 21 is a sequence chart showing one example of an operation according to the third embodiment of the present invention until a soft handover state takes place in a case in which an MH changes connection from a fixed AR to an MAR;
FIG. 22 is a sequence chart showing one example of an operation according to the third embodiment of the present invention to be conducted when an MH which is in a soft handover state switches connection to a single base station; and
FIG. 23 is an illustration of one example of a transfer-accepting management table in a soft handover state according to the second embodiment of the present invention.

### BEST MODE FOR CARRYING OUT THE INVENTION

### <First Embodiment>

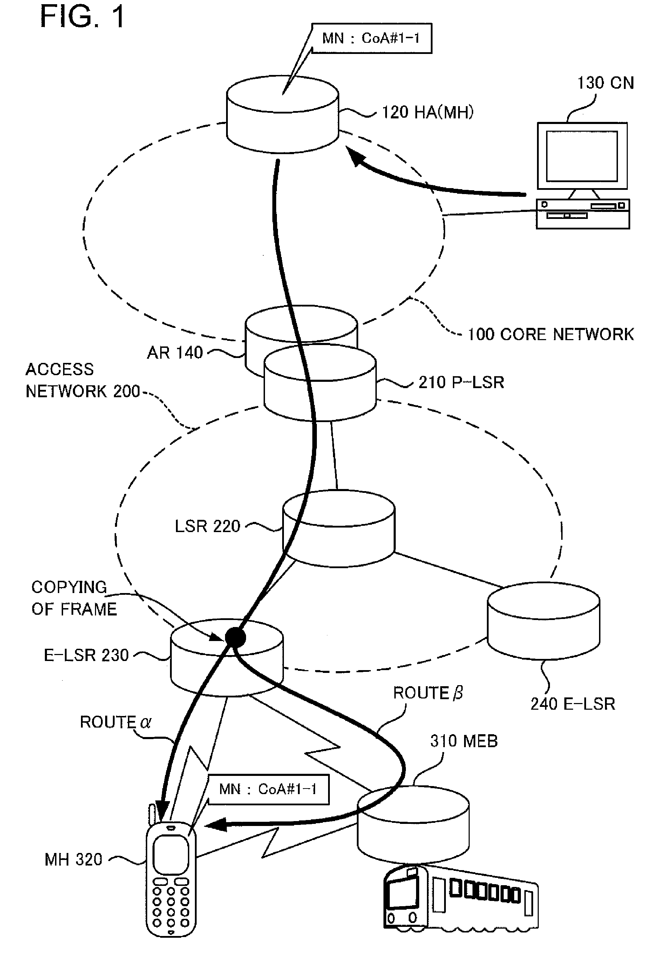

First to third embodiments of the present invention will be described hereinbelow with reference to the drawings. First of all, referring to FIG. 1, a description will be given of a network configuration according to a first embodiment of the present invention and the outline of the present invention. FIG. 1 is an illustration of one example of a network configuration according to the first embodiment of the present invention.

In the network configuration shown in FIG. 1, an access network 200 is connected to an external IP network (core network 100) such as the internet so as to enable a communication between a CN 130 connected to the core network 100 and an MH (Mobile Host: mobile terminal) 320 connected through wireless means to the access network 200.

Moreover, in addition to the aforesaid CN 130, to the core network 100, there are connected an HA (MH) 120 serving as a home agent of the MH 320 and an AR 140 which allows a communication terminal connected to the access network 200 to make a connection with the core network 100.

On the other hand, the access network 200 is composed of a plurality of LSRs and can provide a layer-2 tunnel through the use of EoMPLS. In FIG. 1, there are shown P-LSR 210 and E-LSRs 230 and 240 constituting an edge of the access network 200 and an LSR 220 positioned in the interior (section other than the edge) of the access network 200 (although only one LSR is shown in FIG. 1, the location of a plurality of LSRs is also acceptable).

In this case, let it be assumed that a tunnel is made from the P-LSR 210 positioned at an edge on the core network 100 side up to the E-LSR 230 positioned at an edge on the MH 320 side, that is, a route (LSP: Label Switched Path) from the P-LSR 210 to the E-LSR 230 is established in advance. In addition, the P-LSR 210 is connected to the AR 140 and a connection point between the core network 100 and the access network 200 is made by the P-LSR 210 and the AR 140. Still additionally, let us assume that the E-LSR 230 also has a function as a radio base station (fixed base station), and an MEB (Mobile Edge Bridge) 310 mentioned later and the MH 320 provide a radio link for a connection with the core network 100 through the access network 200.

Moreover, the MEB 310 is a mobile base station functioning as a group mobile control unit. This MEB 310 is connectable to another radio base station (for example, E-LSR 230) and functions as a radio base station by itself, and it can make a connection with the MH 320 to be placed as a subordinate. As well as an MR in the NEMO, this MEB 310 is located in a mobile object and allows the MH 320 to be connected to the core network 100. Meanwhile, a great difference of the MEB 310 from the MR in the NEMO is that the MEB 310 pertains to a layer-2 entity, which does not require an IP address, and merely functions as a radio base station and accommodates the MH 320 as a subordinate without establishing a network serving as a subordinate unlike the MR.

The MH 320 is a user terminal capable of making radio communications and is connected through a radio link to subordinates of the E-LSR 230 and the MEB 310 so as to enable a connection with the CN 130 connected to the core network 100. At this time, even if the MH 320 establishes a connection with the MEB 310, the CoA held by the MH 320 is one in number. Moreover, even if the MH 320 makes the connection change between the MEB 310 and the E-LSR 230, there is no need for the MH 320 to carry out the IP address change processing. Although in the first embodiment of the present invention a description will be given of a case in which the MH 320 mounts the mobile IP and makes a communication using a CoA, the mobile IP is not always mounted in a system and communication terminal related to the present invention.

According to the present invention, for example, in FIG. 1, let us consider a soft handover state in which a radio communication area of the E-LSR 230 (valid area of a radio link connectable to a subordinate under the E-LSR 230) and a radio communication area of the MEB 310 (valid area of a radio link connectable to a subordinate under the MEB 310) overlaps with each other and the MH 320 existing in this overlapping area can carry out the transmission/reception of a packet to/from both the E-LSR 230 and the MEB 310. As a concrete example, for example, it is considered that, in a case in which the E-LSR 230 is located on a platform in a railway station and a train in which the MEB 310 is installed reaches the platform, a user carrying the MH 320 takes the train or alights therefrom.

In this case, let it be assumed that the MH 320 which establishes a connection with the E-LSR 230 or the MEB 310 and acquires a care-of address (CoA#1-1) from the AR 140 makes a communication with the CN 130. The MH 320 which has acquired the CoA #1-1 registers the CoA #1-1 in it sown HA (MH) 120 through the use of the binding update, thereby assuring the reachability of the MH 320 in the IP layer.

That is, in a case in which the CN 130 transmits a packet whose destination address is a home address of an MH, this packet is intercepted by the HA (MH) 120 and encapsulated with a header whose source address is the address of the HA (MH) 120 and whose destination address is the CoA #1-1, thus arriving at the MH 320 connected to the access network 200 under the AR 140. In a case in which the route optimization is made between the MH 320 and the CN 130, the CN 130 transmits a packet in which a route control header is set, and the packet transmitted from the CN 130 toward the MH 320 can directly reach the MH 320 without passing through the HA (MH) 120.

The packet transmitted from the CN 130 to the MH 320 reaches the AR 140 through the HA (MH) 120 or arrives at the AR 140 without passing through the HA (MH) 120 and is transferred by the EoMPLS within the access router 200 under the AR 140, thus reaching the MH 320. According to the first embodiment of the present invention, in a case in which the MEB 310 is connected to the E-LSR 230 and the MH 320 exists in the overlapping area between the radio communication areas of both the E-LSR 230 and the MEB 310 so as to be connectable to both the E-LSR 230 and the MEB 310, the E-LSR 230 copies the aforesaid packet addressed to the MH 320 and the packet is transferred through two routes of a route (route α in FIG. 1) passing through a radio link of the E-LSR 230 and a route (route β in FIG. 1) passing through a radio link of the MEB 310, thereby realizing the soft handover state in the MH 320.

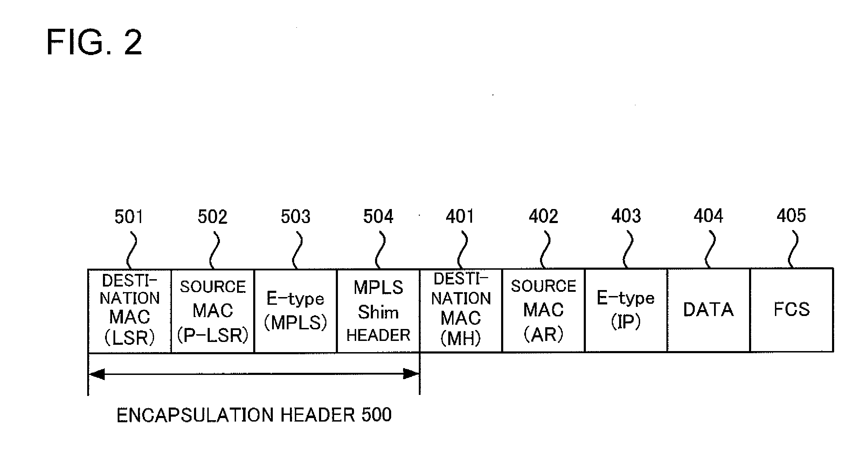

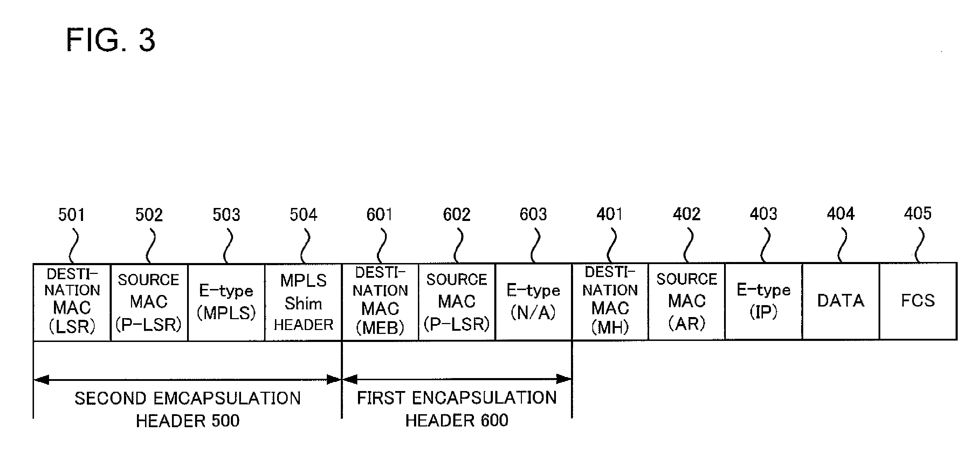

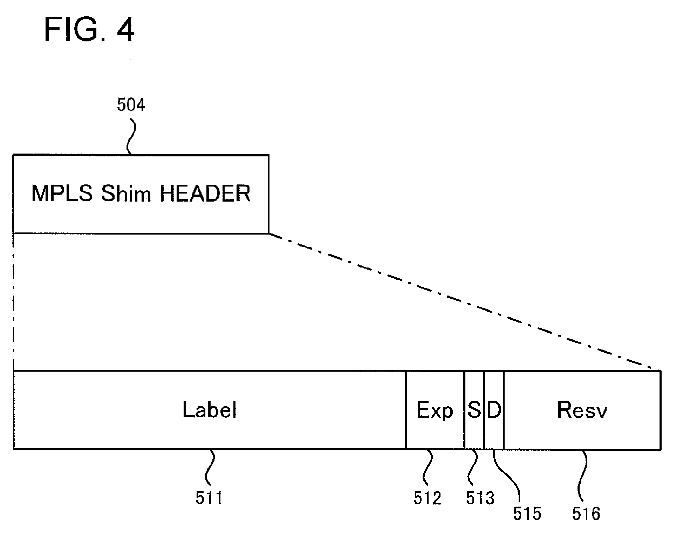

Furthermore, a description will be given hereinbelow of a format of a packet in a case in which a packet transmitted from the CN 130 to the MH 320 is transferred in the interior of the access network 200. FIG. 2 is an illustration of one example of a format of a frame according to the first embodiment of the present invention in a case in which an MH is in connection with only a fixedbase station (E-LSR), FIG. 3 is an illustration of one example of a format of a frame according to the first embodiment of the present invention in a case in which an MH is in connection with a mobile base station (MEB), and FIG. 4 is an illustration of one example of a format of an MPLS Shim header in FIG. 2 and FIG. 3.

Upon receipt of the packet transmitted from the CN 130 toward the MH 320, the AR 140 confirms that the CoA#1-1 having a network prefix suitable to the access network 200 is set in a destination address of the packet (that is, the MH 320 which is a destination of the packet is connected to the access network 200), and it generates an MAC frame including this packet.

In the AR 140, the sections of fields 401 to 405 are generated in the frame format shown in FIGs . 2 and 3. That is, in the AR 140, there is generated an MAC frame including an MAC address put in the destination MAC address field 401, an MAC address of the AR 140 in the source MAC address field 402, a value indicative of IP in the E-type field 403 indicative of the protocol type of the following data field 404, the data on an IP packet received from the core network 100 in the data field 404 and a numeric value for error check in the FCS (Frame Check Sequence) field 405.

The MAC frame generated in the AR 140 is handed over to the P-LSR 210. The P-LSR 210 further encapsulates the MAC frame generated in the AR 140 so as to produce an encapsulated frame. At this time, the P-LSR 210 checks whether or not the MH 320 exists under the MEB 310, and produces an encapsulated frame with a different format in accordance with a result of this check. For example, by referring to a transfer-destination management table which will be mentioned later, the P-LSR 210 can check whether or not the MH 32 exists under the MEB 310.

If the check shows that the MH 320 does not exist under the MEB 310 (that is, in the case of being directly connected to with the E-LSR 230), the P-LSR 210 generates the frame shown in FIG. 2. The frame shown in FIG. 2 is produced by appending an encapsulated header for the transfer by the EoMPLS to the aforesaid MAC frame having the fields 401 to 405. That is, in the P-LSR 210, there is generated an encapsulation header 500 including an MAC address (MAC address of the next hop) of the LSR 220 put in a destination MAC address field 501, an MAC address of the P-LSR 210 in a source MAC address filed 502, a numeric value indicative of MPLS in an E-type field 503, and an MPLS Shim header 504 with a label reachable to the E-LSR 230. It is appended to the MAC frame received from the AR 140.

On the other hand, in a case in which the check shows that the MH 320 exists under the MEB 310, the P-LSR 210 generates the frame shown in FIG. 3. The frame shown in FIG. 3 is produced such that a first encapsulation header for the tunneling to the MEB 310 and a second encapsulation header for the transfer using the EoMPLS are appended to the MAC frame having the above-mentioned fields 401 to 405. That is, the P-LSR 210 generates a first encapsulation header 600 including the MAC address of the MEB 310 placed in a destination MAC address field 601, the MAC address of the P-LSR 210 placed in a source MAC address field 602 and an E-type field 603 (a numeric value to be inserted is not particularly specified), with this first encapsulation header 600 being appended to the MAC frame received from the AP 140 and a second encapsulation header 500 (identical to the encapsulation header 500 including the fields 501 to 504 shown in FIG. 2) being further appended thereto.

Moreover, in a case in which the P-LSR 210 transmits a frame addressed to the MH 320, the P-LSR 210 checks whether or not the MH 320 exists in the overlapping area where packets are receivable from both the E-LSR 230 and the MEB 310 (that is, whether or not to reach a soft handover state) and, if the MH 320 can be placed into a soft handover state, inserts a flag indicative of this fact into the frame. Although the place where this flag is inserted can be arbitrarily set in the frame, in the first embodiment of the present invention, a description will be given of a case in which the flag is inserted into the MPLS Shim header 504.

In the first embodiment of the present invention, the MPLS Shim header 504 shown in FIGs. 2 and 3 is set to have a format shown in FIG. 4. The MPLS Shim header 504 shown in FIG. 4 not only includes a Label field 511, an Exp field 512 and an S field 513 as well as the conventional technique but also includes a field 515 (in this specification, it will be referred to as a D (Drop bit) field 515) for an instruction for copy of a packet to the E-LSR 230, which is made by reforming the conventional TTL field (TTL field 1714 in FIG. 17). The D field 515 is realizable with a 1-bit flag and, for example, as possible rules, when the drop bit of the D field 515 indicates "0", an instruction is given to the E-LSR 230 so as not to copy the frame while, if the drop bit of the D field 515 indicates "1", an instruction is given to the E-LSR 230 so as to copy the frame.

Although the conventional TTL field 1714 is a field indicative of the term of validity on the basis of, for example, the number of hops or the like, since in the access network 200 in the first embodiment of the present invention a frame is transmitted along an LSP previously determined between edges of the access network 200, there is no particular meaning on the determination of the number of valid hops with respect to a frame and, hence, in the first embodiment of the present invention the D field 515 is put in the place of this TTL field 1714. Moreover, the remaining 7 bits of the TTL field 1714 so far specified with 8 bits, other than the 1-bit D field 515 are used as a Resv (reservation field) 516.

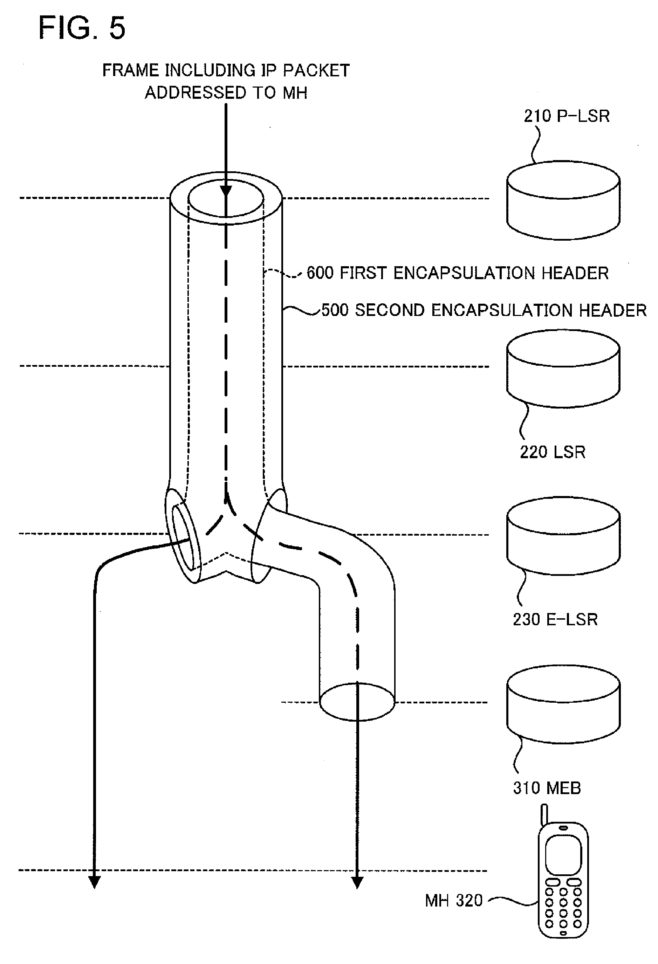

FIG. 5 is an illustrative view showing a tunnel related to a frame to be transferred within an access network. A description will be given hereinbelow of a case in which the MH 320 is in a soft handover state where packets are receivable from both the E-LSR 230 and the MEB 310.

In FIG. 5, upon receipt of a frame including an IP packet addressed to the MH 320, the P-LSR 210 encapsulates the received frame in the first encapsulation header 600 and the second encapsulation header 500 on the basis of the format shown in FIG. 3 and sets the bit of the D field 515 of the MPLS Shim header 504 at the drop bit "1" for the instruction for the copy of the frame to the E-LSR 230.

The frame transmitted from the P-LSR 210 passes through the LSR 220 and reaches the E-LSR 230 according to the same method as the conventional EoMPLS. The E-LSR 230 removes the second encapsulation header 500 for the transfer according to the EoMPLS and confirms the drop bit "1" of the D field 515 of the MPLS Shim header 504. Moreover, the E-LSR 230 copies the frame to which the first encapsulation header 600 is appended so as to directly transfer one frame after the copying (frame encapsulated with the first encapsulation header 600) while removing the first encapsulation header 600 from the other frame after the copying before transmitting the other frame through a radio link to the MH 320.

In addition, receipt of the frame encapsulated with the first encapsulation header 600 from the E-LSR 230, the MEB 310 removes the first encapsulation header 600 and then transmits the frame through a radio link to the MH 320. Thus, packets are transmitted to the MH 320 from both the radio link of the E-LSR 230 and the radio link of the MEB 310, and the MH 320 is placed into a soft handover state where one of these packets is selectively receivable.

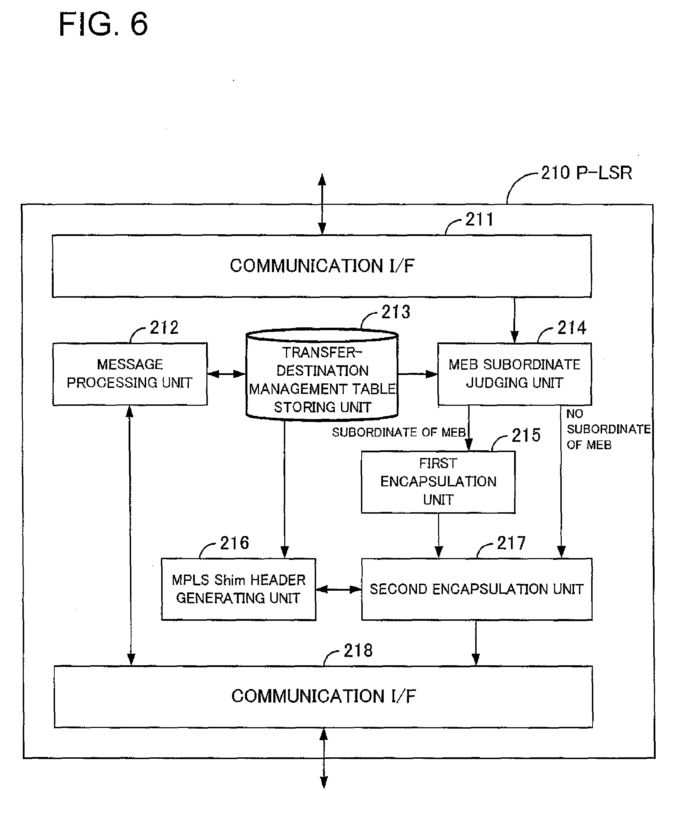

Furthermore, a description will be given hereinbelow of one example of a principal network element configuration in the network shown in FIG. 1. FIG. 6 is a block diagram showing one example of a P-LSR configuration according to the first embodiment of the present invention. The P-LSR 210 shown in FIG. 6 is composed of a communication 1/F (interface) 211, a message processing unit 212, a transfer-destination management table storing unit 213, an MEB subordinate judging unit 214, a first encapsulation unit 215, an MPLS Shim header generating unit 216, a second encapsulation unit 217, and a communication I/F 218.

The communication I/F 211 is an interface which is for making a communication with the core network 100 side (AR 140) in a state connected thereto, while the communication I/F 218 which is for making a communication with the interior (LSR 220) of the access network 200 in a state connected thereto. In this case, although the communication I/F 211 and the communication I/F 218 are shown in a separated condition for convenience only, it is also possible that the communication I/F 211 and the communication I/F 218 are realized by means of the same hardware.

The message processing unit 212 has a message generating/processing function to carry out the message interchange through a control plane in the interior of the access network. The transfer-destination management table storing unit 213 has a function to store a transfer-destination management table for managing the connection relationships of the MEB 310 and MH 320 existing under each of a plurality of E-LSRs.

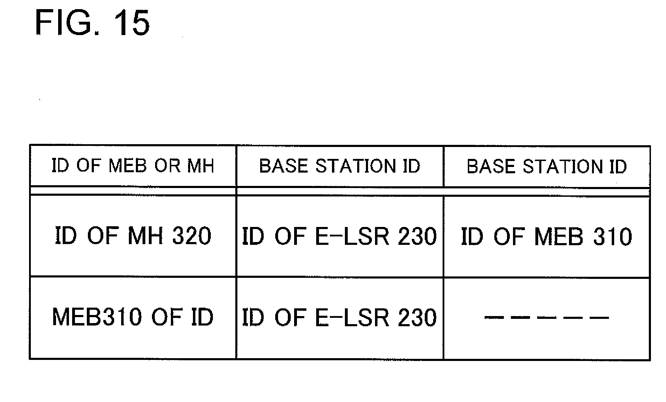

This transfer-destination management table has an arrangement, for example, shown in FIG. 15. FIG. 15 is an illustration of one example of a transfer-destination management table to be stored in the P-LSR according to the first embodiment of the present invention. For example, the transfer-destination management table stores the ID of the E-LSR 230 and the ID of the MEB 310 or the MH 320 in a state associated with each other as the information indicative of the fact that the MEB 310 or the MH 320 exists under the E-LSR 230. Moreover, in a case in which the MH 320 is in a state connectable to both the MEB 310 and the E-LSR 230, in the transfer-destination management table, the ID of the MH 320 is stored in a state associated with both the IDs of the MEB 310 and the E-LSR 230 while, when the MH 320 is connected only a subordinate of the MEB 310, the IDs of the MH 320 and the MEB 310 are stored in a state associated with each other.

In addition, FIG. 15 shows a transfer-destination management table in a case in which the MEB 310 is in a reachable condition through the E-LSR 230 and the MH 320 in a reachable condition (i.e., in a soft handover possible condition) through the E-LSR 230 and the MEB 310. Still additionally, the arrangement of the transfer-destination management table shown in FIG. 15 is only one example, and it is also acceptable that the transfer-destination management table has an arbitrary arrangement as long as it is possible to specify the position of the P-LSR 210 or the MEB 310 at the transfer of a frame thereto.

The MEB subordinate judging unit 214 has a function to refer to the transfer-destination management table stored in the transfer-destination management table storing unit 213 for making a judgment as to whether or not the MH 320 exists under the MEB 310. The MEB subordinate judging unit 214 receives a frame from the core network 100 side and hands over this frame to the first encapsulation unit 215 when the destination (MH 320) of the frame exists under the MEB 310 while handing over this frame to the second encapsulation unit 215 when the destination (MH 320) of the frame does not exist under the MEB 310.

The first encapsulation unit 215 has a function to generate the first encapsulation header 600 shown in FIG. 3 and to make an encapsulation on the frame handed over from the MEB subordinate judging unit 214. The MPLS Shim header generating unit 216 has a function to refer to the transfer-destination management table for generating the MPLS Shim header 504 to be inserted at the encapsulation by the second encapsulation unit 217. Concretely, the MPLS Shim header generating unit 216 carries out the selection of a transfer label in the access network 200, the setting of a numeric value of the D field 515 according to whether or not the MH 320 can receive packets from both the E-LSR 230 and the MEB 310, and other operations. Although a detailed description will be omitted, as well as the conventional technique, the MPLS Shim header generating unit 216 also conducts the insertion of label information corresponding to an LSP to be used for the transfer into the label field 501 of the MPLS Shim header 504.

The second encapsulation unit 217 has a function to generate the encapsulation header 500 shown in FIG. 2 and the second encapsulation header 500 shown in FIG. 3 and carry out the encapsulation on the frame handed over from the MEB subordinate judging unit 214 or the first encapsulation unit 215. Therefore, with respect to the frame regarding the MH 320 on which the MEB subordinate judging unit 214 has made a judgment to the effect that it does not exist under the MEB 310, the encapsulation is made once in the second encapsulation unit 217 so as to generate the frame shown in FIG. 2. On the other hand, with respect to the frame regarding the MH 320 on which the MEB subordinate judging unit 214 has made a judgment to the effect that it exists under the MFB 310, the encapsulation is made twice in the first encapsulation unit 215 and the second encapsulation unit 217 so as to generate the frame shown in FIG. 3. These frames are transmitted through the communication I/F 218 to the interior (concretely, the LSR 220) of the access network 200.

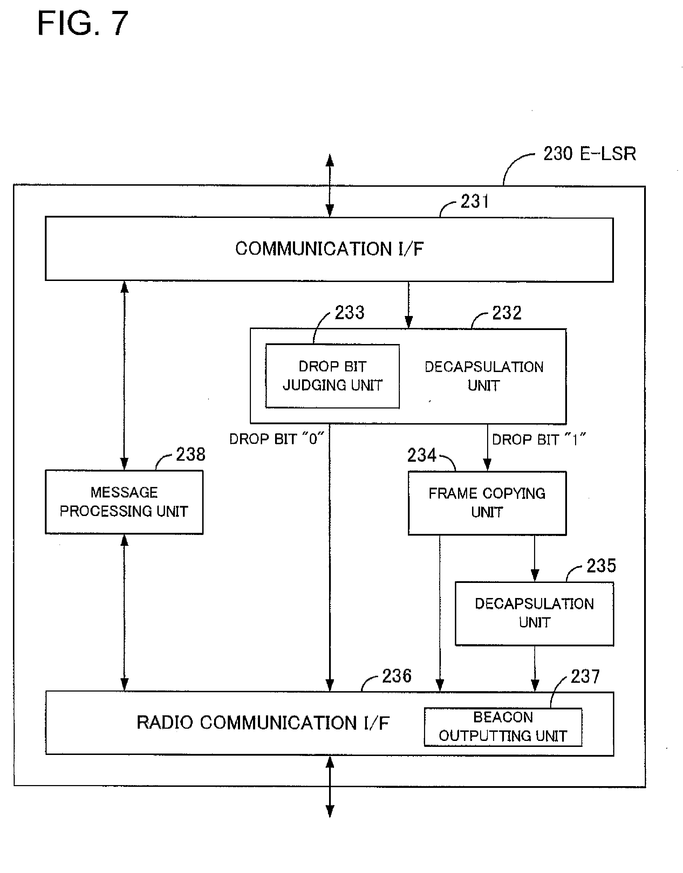

FIG. 7 is a block diagram showing one example of a configuration of an E-LSP according to the first embodiment of the present invention. The E-LSR 230 shown in FIG. 7 is composed of a communication I/F 231, a decapsulation unit 232, a drop bit judging unit 233, a frame copying unit 234, a decapsulation unit 235, a radio communication I/F 236, a beacon outputting unit 237 and a message processing unit 238.

The communication I/F 231 is an interface which is for making a communication in a state connected to the access network 200 side (LSR 220). The decapsulation unit 232 has a function to remove a transfer encapsulation header (encapsulation header 500 shown in FIG. 2 or encapsulation header 500 shown in FIG. 3) from the frame transferred in the interior of the access network 200. The drop bit judging unit 233 has a function to refer to the value of the D field 515 of the MPLS Shim header 504 contained in the aforesaid transfer encapsulation header for determining an output destination of the frame after the decapsulation processing according to the reference result. That is, in the case of the drop bit "0", the frame after the decapsulation is handed over to the radio communication I/F 236 while, in the case of the drop bit "1", the frame after the decapsulation is handed over to the frame copying unit 234.

The frame copying unit 234 has a function to copy the frame received from the decapsulation unit 232 and hand over the frame after the copy to the decapsulation unit 235 and the radio communication I/F 236. The decapsulation unit 235 has a function to remove the encapsulation header (first encapsulation header 600 shown in FIG. 3) from the frame received from the frame copying unit 234. The frame to be handed over from the frame copying unit 234 to the radio communication I/F 236 has a header which reaches the MH 320 through the MEB 310. On the other hand, the frame to be handed over from the decapsulation unit 235 to the radio communication I/F 236 has a header which directly reaches the MH 320.

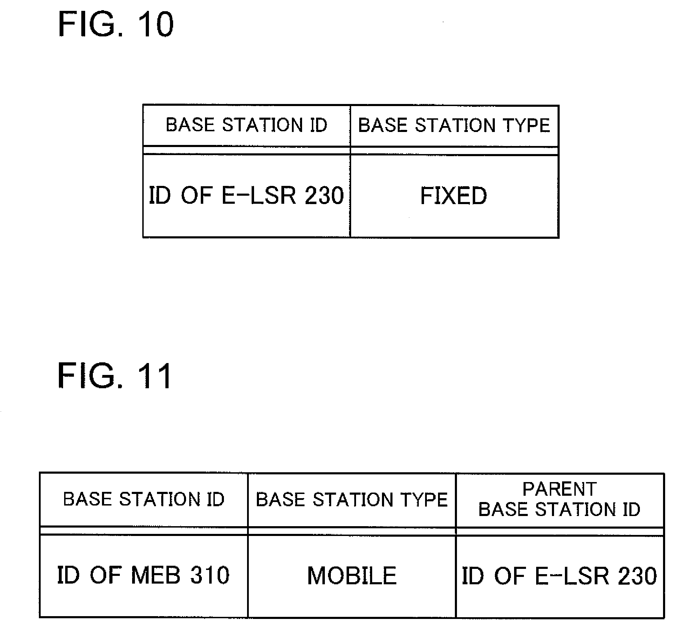

The radio communication I/F 236 is an interface which is for establishing a connection through wireless means to a communication apparatus (the MEB 310 or MH 320 serving as a subordinate) existing within that radio communication area for making communications. The beacon outputting unit 237 has a function to generate/output a beacon to be periodically transmitted from the radio communication I/F 236 to a radio communication area serving as a subordinate. As shown in FIG. 10, for example, a beacon to be outputted from the beacon outputting unit 237 of the E-LSR 230 has a base station ID (ID of the E-LSR 230) and a base station type (information indicative of the fact that it is a fixed base station). In this case, although the E-LSR 230 is designed to have a function as a radio base station, it is also possible that the function of the radio base station is realized with an apparatus different from the E-LSR 230.

The message processing unit 238 has a function to generate/process a message for carrying out the message interchange in the interior of the access network 200 and the message interchange between the MEB 310 and MH 320 serving as subordinates.

The above-mentioned P-LSR 210 and E-LSR 230 further have a function to set an LSP in the interior of the access network 200 and a function to determine appropriate label information corresponding to the LSP. These functions are realized with a route setting unit, not shown. An operation of this route setting unit is the same as the operation for the route setting in a conventional MPLS.

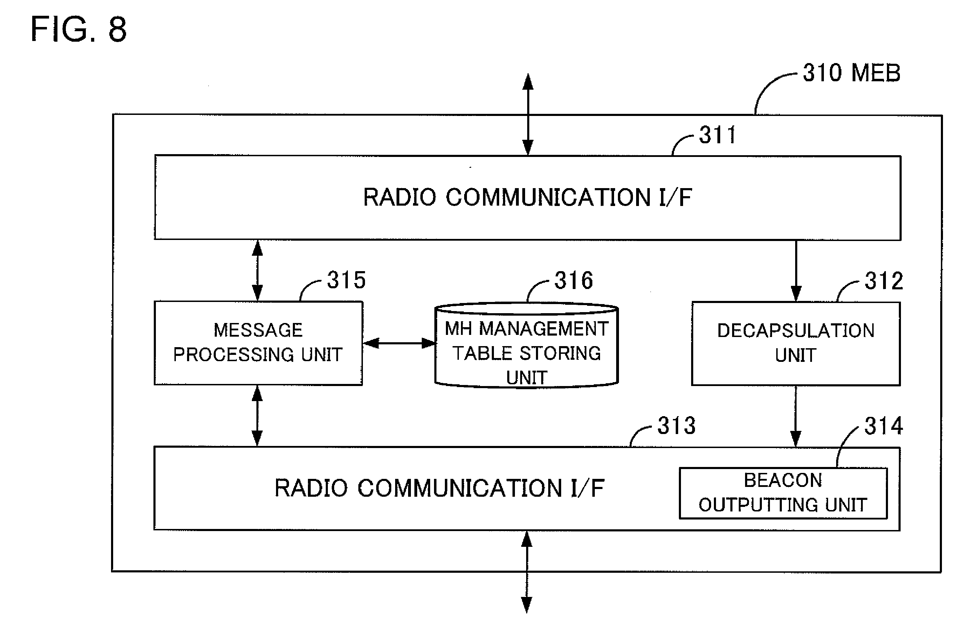

FIG. 8 is a block diagram showing one example of an MEB according to the first embodiment of the present invention. The MEB 310 shown in FIG. 8 a radio communication I/F 311, a decapsulation unit 312, a radio communication I/F 313, a beacon outputting unit 314, a message processing unit 315 and an MH management table storing unit 316.

The radio communication I/F 311 is an interface which is for establishing a connection through wireless means and making communications so that the MEB 310 is accommodated as a subordinate of a different base station (sometimes referred to as a parent base station). On the other hand, the radio communication I/F 313 is an interface which is for establishing a connection through wireless means to communication apparatus (MH 320 serving as a subordinate) existing in that radio communication area for making communications. The beacon outputting unit 314 has a function to generate/output a beacon to be periodically transmitted from the radio communication I/F 313 to the interior of the radio communication area serving as a subordinate. As shown in FIG. 11, for example, a beacon outputted from the beacon outputting unit 314 of the MEB 310 has a base station ID (ID of the MEB 310), a base station type (information indicative of the fact that it is a mobile base station) and a parent base station ID (ID of the E-LSR 230). The parent base station ID of the beacon to be outputted from the MEB 310 varies dynamically because of setting an ID of a host radio base station accommodating the MEB 310.

The decapsulation unit 312 has a function to remove the first encapsulation header 600 from the frame (in FIG. 3, the frame from which the second encapsulation header 500 is removed and which has the first encapsulation header 600 intact). The frame undergoing the decapsulation processing in the decapsulation unit 312 is transferred through the radio communication I/F 313 to the MH 320.

The message processing unit 315 has a function to generate/process a message for carrying out the message interchange with the parent base station (E-LSR 230) or the MH 320 serving as a subordinate. The MH management table storing unit 316 has a function to store an MH management table having a list if the MHs 320 existing under the MEB 310. This MH management table is for managing the MHs 320 existing under the MEB 310.

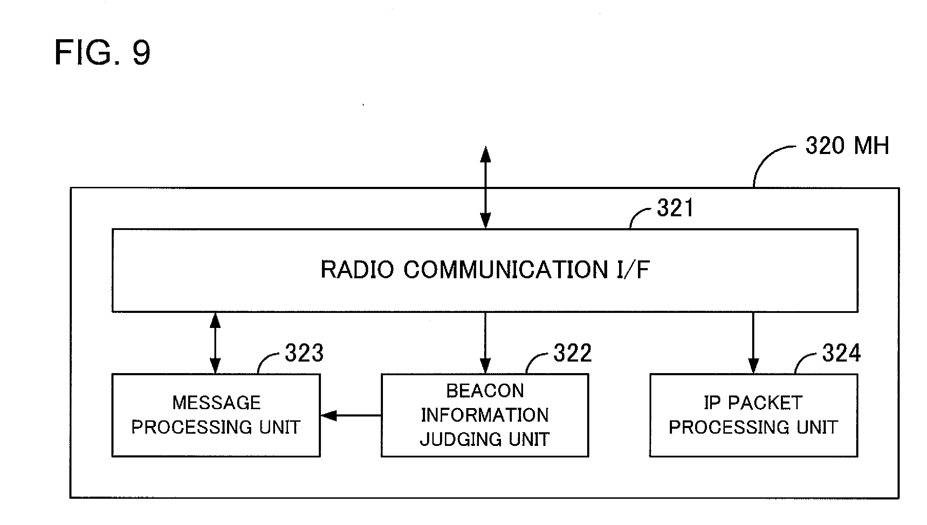

FIG. 9 is a block diagram showing one example of a configuration of an MH according to the first embodiment of the present invention. The MH 320 shown in FIG. 9 is composed of a radio communication I/F 321, a beacon information judging unit 322, a message processing unit 323 and an IP packet processing unit 324.

The radio communication I/F 321 is an interface which is for making a connection and communication through wireless so that the MH 320 is accommodated as a subordinate of a radio base station (E-LSR 230 and/or MEB 310). The beacon information judging unit 322 has a function to make a judgment on the beacon information received from a radio base station with which the MH 320 is in connection. Concretely, on the basis of the beacon (the aforesaid beacon shown in FIG. 10) received from the E-LSR 230, the MH 320 makes a judgment that the E-LSR 230 is a fixed base station and, on the basis of the beacon (the aforesaid beacon shown in FIG. 11) received from the MEB 310, judges that the MEB 310 is a mobile base station. The message processing unit 323 has a function to generate/process a message for carrying out the message interchange with respect to the E-LSR 230 or the MEB 310. The IP packet processing unit 324 has a function to carry out the processing on an IP packet and is an entity positioned at the layer 3 or higher layers.

Although each of FIGs. 6 to 9 mainly shows only the functions for each network element to carry out the processing related to the operation according to the present invention (concretely, the processing for a frame transmitted in a direction from the CN 130 to the MH 320), each network element also has functions (not shown) to carry out the processing for a frame transmitted in a direction from the MH 320 to the CN 320.

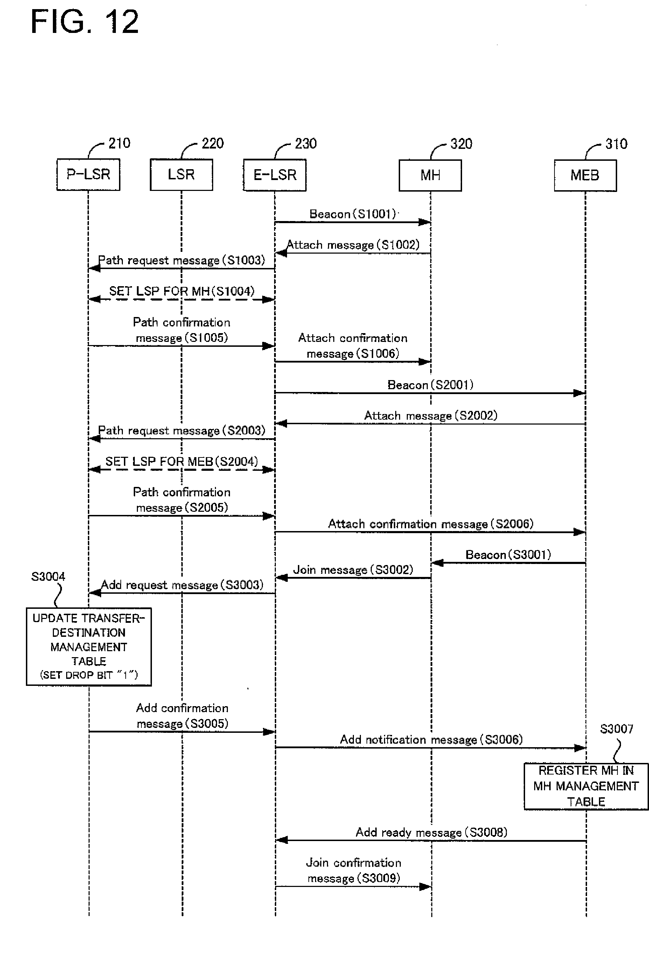

Secondly, a description will be given of an operation according to the first embodiment of the present invention. FIG. 12 is a sequence chart showing one example of an operation according to the first embodiment of the present invention to be conducted until reaching a soft handover state in a case in which an MH changes a connection from an E-LSR to an MEB. The sequence chart shown in FIG. 12 relates to the processing to be conducted until the MH 320 is placed into a soft handover state in an initial condition in which the MH 320 is not in connection with the MEB 310.

In FIG. 12, first of all, the MH 320 moves into a radio communication area of the E-LSR 230, and the MH 320 receives a beacon from the E-LSR 230 (step S1001). This beacon contains the ID of the E-LSR 230 and the information indicative of the fact that the E-LSR 230 is a fixed base station, as mentioned above.

In a case in which the MH 320 establishes a connection with the E-LSR 230 serving as a fixed base station, the MH 320 first transmits a message (Attach message) indicative of the establishment of the connection to the E-LSR 230 (step S1002). Upon receipt of this Attach message, the E-LSR 230 transmits, to the P-LSR 210, a message (Path request message) for making a request for generating a route (LSR) for a frame addressed to the MH 320 within the access network 200 (step S1003). This Path request message includes at least the ID of the MH 320 and the ID of the L-LSR 230.

Upon receipt of the Path request message, the P-LSR 210 starts to set an LSR to which a frame addressed to the MH 320 is transferred from the P-LSR 210 to the E-LSR 230 within the access network 200 (step S1004). This method of setting the LSP can be set arbitrarily and, for example, it is also possible to employ the same method as the conventional method based on the MPLS (concretely, RSVP-TE (Resource ReSerVation Protocol-Traffic Engineering) or the like).

When the setting of the LSP in the step S1004 reaches completion, the P-LSR 210 transmits a message (Path confirmation message) indicative of the fact that an LSP is established for the MH 320 which is in connection with the E-LSR 230 (step S1005). Although not shown, at this time, in the P-LSR 210, the transfer-destination management table is updated and the information to the effect that the MH 320 is in connection with a subordinate of the E-LSR 230 is registered in the transfer-destination management table. Moreover, upon receipt of this Path confirmation message, the E-LSR 230 transmits a message (Attach confirmation message) indicative of the completion of the connection of the MH 320 toward the MH 320 serving as its own subordinate (step S1006). The aforesaid Path confirmation message is a response message to the Path request message, and the Attach confirmation message is a response message to the Attach message.

On the other hand, with respect to the MEB 310, as well as the above-mentioned processing on the MH 320, an LSP for the MEB 310 is established through the processing in steps S2001 to S2006. That is, through the above-mentioned message interchange in the steps S1001 to S1006, an LSP for the MH 320 to receive a frame addressed to it is set in the access network 200, and through the message interchange in the steps S2001 to S2006, an LSP for the MEB 310 to receive a frame addressed to it is set in the access network 200. Along with the message interchange in the steps S2001 to S2006, for example, the information to the effect that the MEB 310 is in connection with a subordinate of the E-LSR 230 is registered in the transfer-destination management table of the P-LSR 210.

Moreover, at this time, according to the format shown in FIG. 2 where the drop bit of the D field 515 of the MPLS Shim header is set at "0", the frame addressed to the MH 320 connected to only the E-LSR 230 is transferred within the access network 200, and according to the format shown in FIG. 3 where the drop bit of the D field 515 of the MPLS Shim header is set at "0", the frame addressed to the MEB 310 or the MH 320 existing under the MEB 310 is transferred within the access network 200.

Let us consider that, in this condition, the MH 320 continuously exists within the radio communication area of the E-LSR 230 and moves into the radio communication area of the MEB 310. Concretely, for example, it is considered that a radio communication area of the E-LSR 230 is formed in a platform of a railway station and a user possessing the MH 320 exists within this radio communication area and a train in which the MEB 310 is located enters the platform of the station.

In a case in which the MH 320 moves into the radio communication area of the MEB 310 (or the MEB 310 moves so that this radio communication area covers the existing position of the MH 320), the MH 320 becomes capable of receiving a beacon from the MEB 310 (step S3001). This beacon includes the ID of the parent base station (i.e., the ID of the E-LSR 230) with which the MEB 310 is currently in connection, in addition to the ID of the MEB 310 and the information indicative of the fact that the MEB 310 is a mobile base station as mentioned above.

Upon receipt of the beacon from the MEB 310, the MH 320 can make a communication through the MEB 310 and grasp that the parent base station of the MEB 310 is identical to the radio base station (i.e., the E-LSR 230) with which it is in connection, and the MH 320 transmits a message (Join message) including the ID of the MEB 310 to the E-LSR 230 (step S3002). Upon receipt of this Join message, the E-LSR 230 transmits a message (Add request message) including the ID of the MEB 310 and the ID of the MH 320 to the P-LSR 210 through the use of a control plane (step S3003). This Add request message includes at least the ID of the MEB 310 and the ID of the MH 320.

The P-LSR 210 receives this Add request message and refers to the ID of the MEB 310 and the ID of the MH 320 included in the Add request message so as to carry out the updating of the transfer-destination management table (step S3004) . Concretely, in the transfer-destination management table, the P-LSR 210 additionally registers the ID of the MEB 310 in the entry of the ID of the base station with which the MH 320 can make a communication.

Moreover, the P-LSR 210 transmits a message (Add confirmation message), which is indicative of the fact that the additional registration of the transfer-destination management table reaches completion, to the E-LSR 230 through the use of a control plane (step S3005) . Upon receipt of this Add conformation message, the E-LSR 230 transmits, to the MEB 310 connected to it, a message (Add notification message) including the ID of the MH 320 for notifying the fact that a new MH 320 tries to come under the MEB 310 (step S3006). Upon receipt of this Add notification message, the MEB 310 grasps that the relevant MH 320 moves under it and registers the new MH 320 in the MH management table (step S3007). Following this, the MEB 310 returns, to the E-LSR 230, a message (Add ready message) indicative of the fact that the additional registration of the MH 320 in the MH management table (step S3008). Upon receipt of this Add ready message, the E-LSR 230 transmits, to the MH 320 serving as its own subordinate, a message (Join confirmation message) indicative of the fact that it can be joined to a group of the MEB 310 (step S3009).

Furthermore, after the time that the updating of the transfer-destination management table has been made in the aforesaid step S3004, a change of the format of the frame to be transferred from the P-LSR 210 through the access network 200 to the MH 320 takes place. Concretely, the P-LSR 210 changes the format of the frame addressed to the MH 320 to the format shown in FIG. 3 where the drop bit of the D field 515 of the MPLS Shim header 504 is set at "1".

Upon receipt of the frame where the drop bit of the D field 515 of the MPLS Shim header 504 is set at "1", the E-LSR 230 copies the frame in a state where the second encapsulation header 500 is removed therefrom and transfers the frame after the copying (frame to which the first encapsulation header 600 is appended) to the MEB 310 and further transmits directly the frame, from which the first encapsulation header 600 is removed, to the MH 320.

Thus, the frame addressed to the MH 320 is transferred from the P-LSR 210 to the E-LSR 230 through the use of only the LSP of the MEB 310 and is reachable to the MH 320 through any one of the route through which it is directly sent from the E-LSR 230 and the route passing through the MEB 310, thereby realizing the soft handover state of the MH 320. That is, the MH 320 can continuously receive a frame even from the E-LSR 230 with which it still is currently in connection while making preparations for coming under the MEB 310 and can immediately receive a frame from the MEB 310 even in a case in which the layer-2 link is switched to a subordinate of the MEB 310. Moreover, since the LSP for the MH 320 which was used by the MH 320 up to that time is not put to use for the frame transfer from the P-LSR 210 to the E-LSR 230, it is possible to cut down the wasteful use of the band.

The MH 320 can freely make the selection of a base station in the above-mentioned soft handover state. That is, the MH 320 can switch the layer-2 link from one of the two base stations of the E-LSR 230 and the MEB 310 to the other under an arbitrary condition and at an arbitrary timing and it can conduct no switching of the layer-2 link intentionally. Moreover, in a case in which the MH 320 is capable of making communication through the use of a plurality of interfaces, it can receive frames simultaneously from two base stations.

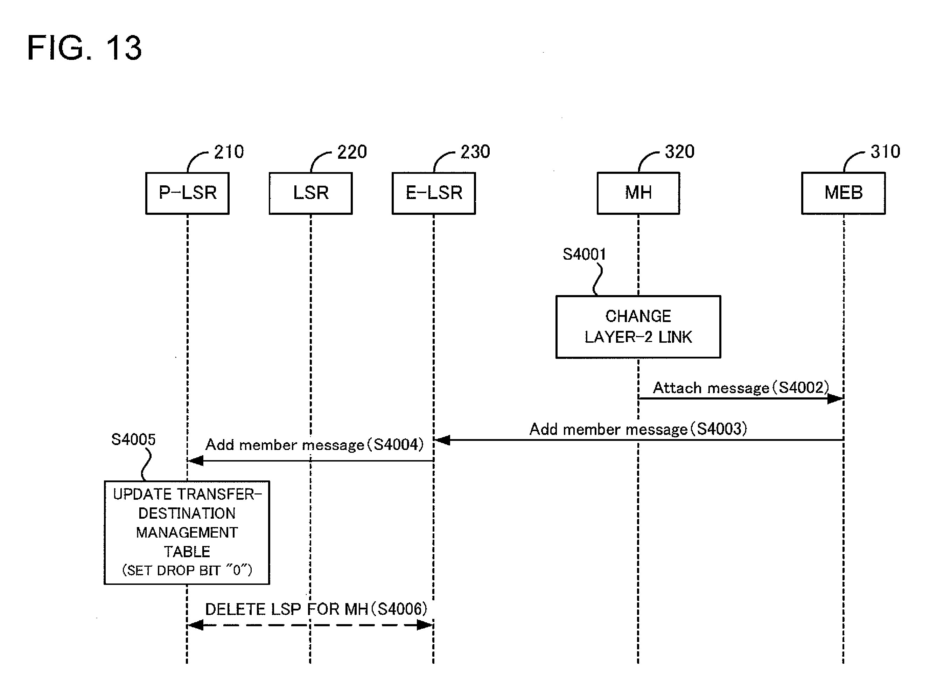

Furthermore, a description will be given of a case in which, in the above-mentioned soft handover state, the MH 320 separates from the radio communication area of the E-LSR 230 in which it first existed and moves into the radio communication area of the MEB 310. FIG. 13 is a sequence chart showing one example of an operation for an MH in a soft handover state to switch the connection to a single base station. Concretely, for example, it is considered that the user possessing the MH 320 separates from the platform of the railway station which forms the radio communication area of the E-LSR 230 and takes a train which forms the radio communication area of the MEB 310. The sequence chart of FIG. 13 shows the processing subsequent to the processing in FIG. 12, that is, in the sequence chart of FIG. 13, the frames addressed to the MH 320 flow in both the E-LSR 230 and the MEB 310, and the state in which the MH 320 is in connection with the E-LSR 230 is taken as an initial state.

In FIG. 13, in the case of changing the layer-2 link from the E-LSR 230 to the MEB 310 (step S4001), the MH 320 transmits a message (Attach message) indicative of the implementation of a connection to the MEB 310 (step S4002). When receiving this Attach message, the MEB 310 transmits, to the E-LSR 230, a message (Add member message) indicative of the fact that the MH 320 has established a connection thereto (step S4003), while the E-LSR 230 transfers the contents of this Add member message to the P-LSR 210 (step S4004). This Add member message includes at least the ID of the MEB 310 and the ID of the MH 320.

When receiving this Add member message, the P-LSR 210 grasps the fact that the MH 320 has switched the connection to the MEB 310 and started the communication thereto and registers, in the transfer-destination management table, the fact that the MH 320 is in connection with only a subordinate of the MEB 310 and further changes the setting of the drop bit of the D field 515 within the frame addressed to the MH 320, from "1" to "0" (step S4005) . Thus, the frame addressed to the MH 320 and transferred from the P-LSR 210 up to the E-LSR 230 is transmitted through only the MEB 310 to the MH 320 without being copied in the E-LSR 230. Following this, the P-LSR 210 deletes the LSP for the MH 320 within the access network 200 which was used up to that time (step S4006). The deletion of this LSP can be made actively by the transmission of a message for the LSP deletion, or it can also be made passively by the time-out.

As described above, according to the above-mentioned operations, when the MH 320 connected to a certain fixed base station (E-LSR 230) carries out the soft handover to a mobile base station (MEB 310) connected to the same fixedbase station, a frame addressed to the MH 320 is transferred to both the fixed base station and the mobile base station through the use of the LSP for the MEB 310, which prevents the frames having the same contents from being transferred doubly within the access network 200, thus enabling a reduction of the wasteful use of the band. Moreover, since the LSP for the MEB 310 is used for the communication by the MH 320 after the handover (that is, the LSP for the MH 320 after the handover is integrated with the LSP for the MEB 310), the enhancement of the efficiency of a path configuration is achievable.

In the above-mentioned sequence chart shown in FIG. 13, although the copying of the frame in the E-LSR 230 reaches termination at the time that the MH 320 has switched the layer-2 link from the E-LSR 230 to the MEB 310, it is also acceptable that the stopping of the copying processing on the frame in the E-LSR 230 is made at an arbitrary timing.

That is, for example, even in a case in which the MH 320 frequently switches the layer-2 link between two base stations while staying in an overlapping area between the two base stations for a long period of time or when, considering a possibility that frequently shuttling between the radio communication areas of two base stations, the MH 320 has switched the layer-2 link from one bases station to the other base station, it is also possible that the frame transmission by the MH 320, which passes through the two base stations, is made in a continuous manner to some degree.

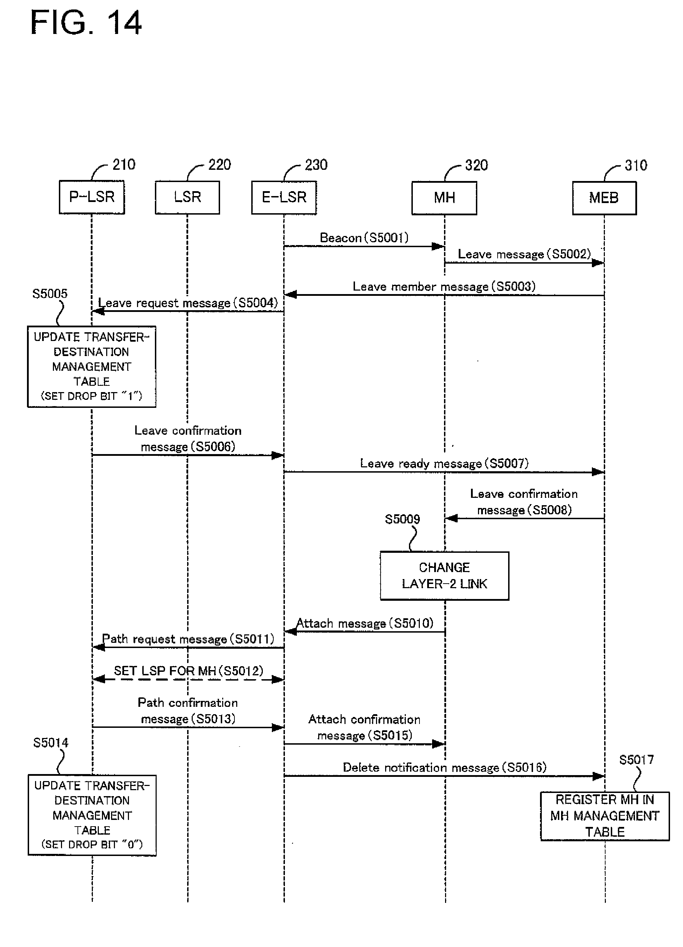

Although with reference to FIGs . 12 and 13 a description has been given of the processing concerning the soft handover to be conducted when the MH 320 changes the connection from the E-LSR 230 to the MEB 310, with reference to FIG, 14, a further description will be given hereinbelow of the processing regarding the soft handover to be conducted when the MH 320 changes the connection from the MEB 310 to the E-LSR 230. FIG. 14 is a sequence chart showing one example of an operation to be conducted until a soft handover state occurs in a case in which an MH changes the connection from an MEB to an E-LSR.

Concretely, for example, it is considered that the MEB 310 is located in a train and a user possessing the MH 320 and has taken the train alights from the train and moves to a platform of a railway station. In the sequence chart shown in FIG. 14, a state in which the MH 320 is in connection with the MEB 310 and it is not in connection with the E-LSR 230 is taken as an initial state. For example, a state immediately after a train on which a user carrying the MH 320 gets reaches a station is considered as the initial state.

First, the MH 320 receives a beacon from the E-LSR 230 in the radio communication area of the E-LSR 230 (step S5001). As mentioned above, this beacon includes the ID of the E-LSR 230 and the information indicative of the fact that the E-LSR 230 is a fixed base station.

In a case in which the MH 320 changes the connection from the MEB 310 to the E-LSR 230, the MH 320 first transmits a message (Leave message) indicative of the end of the connection with the MEB 310 to the MEB 310 (step S5002) . When receiving this Leave message, the MEB 310 transmits, to the E-LSR 230, a message (Leave member message) for notifying that the MH 320 departing therefrom exists (step S5003).

Upon receipt of the Leave member message, the E-LSR 230 transmits a message (Leave request message) indicative of the departure of the MH 320 from the MEB 310 to the P-LSR 210 through the use of a control plane (step S5004). This Leave request message includes at least the ID of the MEB 310 and the ID of the MH 320.

Upon receipt of this Leave request message, the P-LSR 210 refers to the ID of the MEB 310 and the ID of the MH 320 included in the Leave request message for updating the transfer-destination management table (step S5005). Concretely, in the transfer-destination management table, the P-LSR 210 additionally registers the ID of the E-LSR 230 in the entry of the IDs of the base stations with which the MH 320 can make communications.

Moreover, the P-LSR 210 transmits a message (Leave confirmation message) indicative of the completion of the additional registration of the transfer-destination management table to the E-LSR 230 through the use of the control plane (step S5006). Upon receipt of this Leave confirmation message, the E-LSR 230 transmits a message (Leave ready message) for notifying that the preparation at the departure of the MH 320 from the MEB 310 reaches completion (step S5007) . Upon receipt of this Leave ready message, the MEB 310 transmits a response message (Leave confirmation message) to the Leave message to the MH 320 serving as its own subordinate (step S5008).

The P-LSR 210 sets the drop bit of the D field 515 of the MPLS Shimheader 504 at "1" with respect to a frame addressed to the MH 320 and transferred through the access network 200 at the time of the updating of the transfer-destination management table in the aforesaid step S5005. In consequence, the E-LSR 230 receives a frame with the format shown in FIG. 3 where the drop bit of the D field 515 of the MPLS Shim header 504 is set at "1", and transfers, to the MEB 310, the frame from which the second encapsulation header 500 is removed (frame to which the first encapsulation header 500 is appended) and further directly transfers, to the MH 320, the frame from which the second encapsulation header 500 and the first encapsulation header 600 are removed, thereby realizing the soft handover state of the MH 320.

In this soft handover state, the MH 320 can determine the implementation of a change of the base station (or no implementation thereof) under an arbitrary condition and at an arbitrary timing. Furthermore, a description will be given hereinbelow of a case in which the MH 320 which has received the Leave confirmation message in the step S5008 recognizes the completion of the preparation of the handover and immediately conducts the layer-2 link change to the E-LSR 230.

In the case of the change of the layer-2 link from the MEB 310 to the E-LSR 230 (step S5009), the MH 320 transmits a message (Attach message) indicative of the implementation of a connection to the E-LSR 230 (step S5010) . Upon receipt of this Attach message, the E-LSR 230 transmits, to the P-LSR 210, a message (Path request message) for making a request for generating a route (LSP) of a frame addressed to the MH 320 in the interior of the access network 200 (step S5011).

Upon receipt of the Path request message, the P-LSR 210 starts the setting of an LSP through which a frame addressed to the MH 320 is transferred from the P-LSR 210 toward the E-LSR 230 within the access network 200 (step S5012). The method of setting the LSP can be selected arbitrarily and, for example, it is possible to employ the same method as the conventional method based on the EoMPLS.

When the setting of the LSP reaches completion in the step S5013, the P-LSR 210 transmits a message (Path confirmation message) for notifying the establishment of the LSP for the MH 320 connected to the E-LSR 230 (step S5013), and updates the transfer-destination management table with the contents of the MH 320 connected to only a subordinate of the E-LSR 230 (step S5014). According to this updating of the transfer-destination management table, the frame addressed to the MH 320 and sent from the P-LSR 210 is changed to the format shown in FIG. 2 where the drop bit of the D filed 515 of the MPLS Shim header 504 is set at "0". Moreover, this frame addressed to the MH 320 is transferred through the use of the newly set LSP for the MH 320.

Upon receipt of this Path confirmation message, the E-LSR 230 transmits a message (Attach confirmation message) indicative of the completion of the connection of the MH 320 toward the MH 320 serving as a subordinate (step S5015) and, since the MH 320 has been connected to the E-LSR 230 and the LSP for the MH has been set, transmits, to the MEB 310 to which the MH 320 has pertained up to that time, a message (Delete notification message) indicative of the fact that the frame related to the MH 320 is not transmitted to the MEB 310 (step S5016). Upon receipt of this Delete notification message, the MEB 310 deletes the relevant MH 320 from the MH management table (step 55017) .

As described above, according to the above-mentioned operations, when the MH 320 serving as a subordinate of a mobile base station (MEB 310) connectedto a certain fixed base station (E-LSR 230) carries out the handover with respect to the aforesaid fixed base station, a frame addressed to the MH 320 is transferred to both the fixed base station and the mobile base station through the use of the LSP for the MEB 310, which prevents the frames having to same contents from being transferred doubly within the access network 200, thus enabling a reduction of the wasteful use of the band. Moreover, the MH 320 can make communication through the use of the LSP for the MEB 310 even at the setting of a new LSP for the MH 320, so the soft handover with less packet loss becomes realizable.

Incidentally, in the soft handover state where the MH 320 can receive frames from a plurality of base stations, a mode in which the frames are actually transmitted from the plurality of base stations to the MH 320, a mode in which the frames are held in the interiors of the base stations until the link connection is established or other modes depend upon a radio communication method, and the present invention are not particularly limited thereto.

### <Second Embodiment>

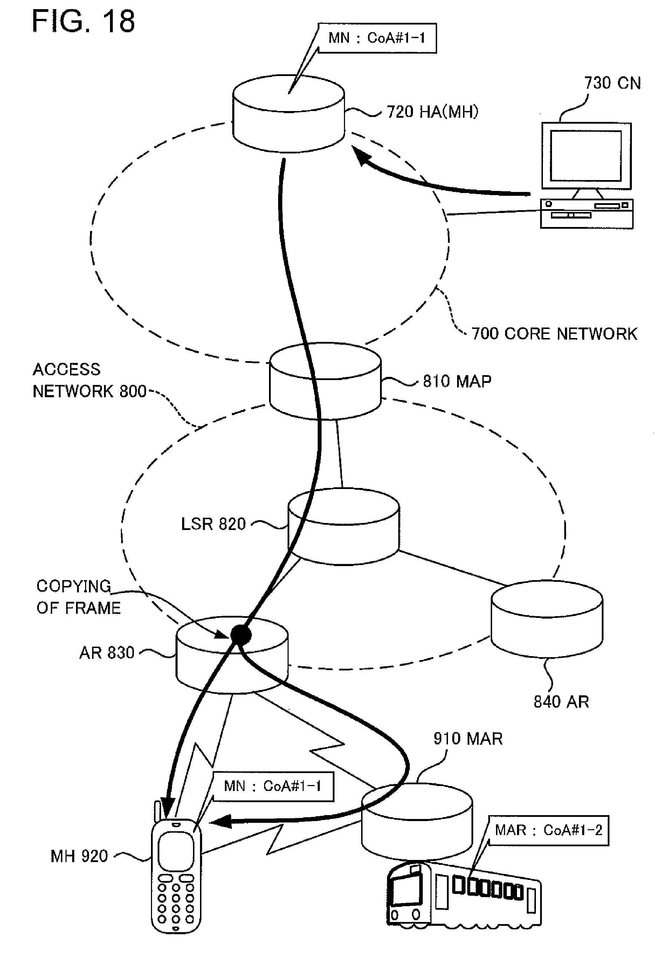

Secondly, a description will be given of a second embodiment of the present invention. FIG. 18 is an illustration of one example of a network configuration according to the second embodiment of the present invention. In the network configuration shown in FIG. 18, an access network 800 is connected to a core network 700, and communications can be made between a CN 730 connected to the core network 700 and an MH 920 connected to the access network 800.

In this case, the layer 2 is terminated at a terminal side edge (AR 830) of the access network 800. Moreover, in the access network 800, a tunnel is established from an apparatus (MAP 810) positioned at an edge on the core network 700 side to an apparatus (AR 830) positioned at an edge on the MH 920 side. This tunnel establishing method and the type of the tunnel are not particularly limited.

In FIG. 18, although an MAP (Mobility Anchor Point) in an HMIP (Hierarchical Mobile IP) is located as the apparatus positioned at the core network side edge, the present invention is not limited to the MAP, but it is also possible to employ an arbitrary communication apparatus capable of carrying out the connection management in an access network.

Since the AR 830 provides a function as an access router to the MH 920, the MH 920 can generate an IP address (CoA #1-1) and make communications by receiving a router advertisement message from the AR 830. However, in the second embodiment of the present invention, the AR 830 functions at the presence on the same subnet when viewed from the MH 920. Concretely, in a case in which a plurality of ARs (in FIG. 18, two ARs 830 and 840) positioned at a terminal side edge of the access network 800 exist, each of these plurality of ARs 830 and 840 has the same prefix. Therefore, in the case of changing the connection between ARs (for example, between ARs 830 and 840) pertaining to the same access network 800, the MH 920 is not required to change the IP address.

Moreover, the MAR (Mobile Access Router) 910 is a mobile access router functioning as a mobile control unit for group. This MAR 910 is connectable to the ARs 830 and 840 in the access network 800 and the MAR 910 itself functions as an access router and becomes capable of establishing a connection with the MH 920 under it by notifying the same prefix as those of the host ARs 830 and 840 to its own subordinates.

As mentioned above, the MAR 910 has a subnet with the same prefix as those of the ARs 830 and 840 (which will sometimes be referred as hereinafter to a fixedAR or fixed access router) positioned at a terminal side edge of the access network 800, and basically conducts the same behavior as those of the ARs 830 and 840, pertaining to the access network 800, with respect to the MH 920 serving as it own subordinate. Therefore, the MH 920 is not required to change the IP address even in a case in which the connection is changed between the ARs 830 and 840 pertaining to the access network 800 and this MAR 910. Moreover, although a single MAR 910 is shown in FIG. 18, the existence of a plurality of MARs is also acceptable, and the MH 920 is not required to change the IP address even in the case of changing the connection with respect to the MAR 910.

As described above, the MAR 910 is connected to a host AR (for example, the AR 830) and receives a prefix notified from the AR 830 so as to generate its own IP address (CoA #1-2).

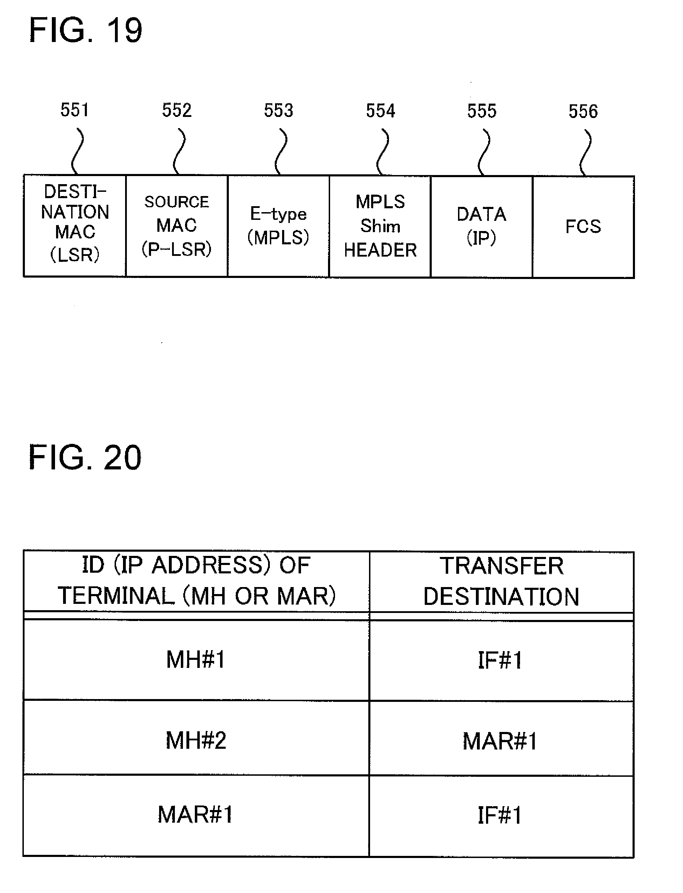

Furthermore, a description will be given of a format of a frame to be transmitted from the MAP 810 according to the second embodiment of the present invention. FIG. 19 is an illustration of one example of a format of a frame to be transmitted from an MAP.

With respect to the MH 920 connected to the AR 830 (fixed access router) positioned at the terminal side edge of the access network 800 and the MH 920 connected to the MAR 910 serving as a mobile access router, there is no difference in the frame format outputted from the MAP 810. That is, irrespective of which of a fixed access router and a mobile access router is in connection with the MH 920, the MAP 810 conducts the frame transmission by use of the same frame format.

As shown in FIG. 19, the frame transmitted from the MAP 810 includes a destination MAC address field 551 having the MAC address (next hop destination MAC address) of the LSR 820, a source MAC address field 552 having the MAC address of the MAP 810 itself, an E-type field 553 indicative of a protocol type (MPLS) of the following field, an MPLS Shim header 554 having a label enabling the identification of each MH 920 (including the MAR 910), a data field 555 containing an IP packet (the destination IP address is the CoA #1-1 of the MH 920 while the source IP address is the IP address of the HA 720 or the CN 730), and an FCS field 556 containing a numeric value for error check.

The MAP 810 receives the notification on the connection position of each MH 920 or each MAR 910 (i.e., a fixed AR connected) from each fixed AR so as to grasp and manage the connection positions of eachMH 920 andeachMAR 910. Moreover, the MAP 810 manages the labels enabling the identification of each MH 920 and each MAR 930 in order to generate the aforesaid frame shown in FIG. 19, and encapsulates the frame by use of these labels.

As mentioned above, the MAR 910 is also managed in a state where an individual label is allocated thereto as one MH 920. Therefore, in a case in which the MH 920 exists under the fixed AR 830, a label unique to the MH is used as the label. On the other hand, in a case in which the MH 920 exists under the MAR 910, since the frame transfer is made to the MAR 910, a label unique to the MAR is used as the label. Therefore, in a case in which the MH 920 exists under the fixed AR 830 and it exists under the MAR 910, the MAP 810 uses the same frame formats into which different label values are inserted.

Moreover, in a case in which the MH 920 is in a condition where packets are receivable from, for example, both the fixed AR 830 and the MAR 910 (soft handover state), as well as the first embodiment of the present invention, the apparatus (MAP 810) on the core network side in the access network 800 sets the drop bit and the terminal side apparatus (AR) in the access network copies a packet, and the transfer is made so that the MH can receive the packet from any one of the fixed AR and the mobile AR.

This series of operational sequences are basically similar to those of the above-described first embodiment of the present invention. A description will be given hereinbelow of only difference of the second embodiment of the present invention from the above-described first embodiment of the present invention. The AR according to the second embodiment of the present invention differs in frame transmission method from that of the above-described first embodiment of the present invention. In the second embodiment of the present invention, the apparatus (AR 830) positioned at an edge of the access network 800 terminates the layer 2, unlike the case of the EoMPLS, difficulty is experienced in merely deleting the first L2 header (i.e., deleting a tunnel header) and transferring.

For this reason, usually, for example, a terminal (MH 920) connected to the AR 830 itself has a connection management table to be used for managing the mapping between a terminal ID (IP address) and an LSP (label) put to use. That is, the AR 830 can recognize the next hop IP address on the basis of the label of the frame received from the interior of the access network and generate and transmit a correct MAC address. Thus, also with respect to a frame to be transferred to the MH 920 connected to the MAR 910, a correct transfer can be made from the AR 830 to the MAR 910 in a manner such that a label for the MAC is only inserted into the frame format shown in FIG. 19.

When recognizing the drop bit at the soft handover, the AR 830 carries out the processing to acquire the next hop IP address from a normal label and further conducts the processing to acquire the next hop transfer destination by using a destination IP address of a packet. Since the destination of the packet is the care-of address (CoA #1-1) of the MH 920 connected to the AR 830 itself, the MAC address of the MH 920 is retrieved on the basis of a normal neighbor cache table and a frame addressed to the MH 920 is generated and transmitted.

Thus, although in the first embodiment of the present invention an instruction for the copying of a frame and an instruction on the number of times of deletion of tunnel header are given by drop bits, according to the second embodiment of the present invention, an instruction on the copying of a frame and an instruction for making reference to information (IP address in an IP packet) in a received packet for determining a transfer-accepting side node are given by drop bits. That is, according to the second embodiment of the present invention, for example, information indicative of the soft handover state exists in a tunnel header appended to the received frame, the AR 830 positioned at an edge of the access network 800 carries out the frame transfer in a state where the next hop determined on the basis of the tunnel ID is set as a transfer destination and further conducts the frame transfer in a state where the next hop determined on the basis of the destination IP address of an IP packet included in the received frame is set as a transfer destination.

Thus, in comparison with the first embodiment of the present invention, in the case of the second embodiment of the present invention, the overhead by the tunnel header within the access network 800 is further reducible. Moreover, since the layer 2 terminates at an edge (ARs 830 and 840) of the access network 800, it is possible to prevent a broadcast frame from flowing into the access network 800. Still moreover, according to the second embodiment of the present invention, if a tunnel up to a fixed AR is distinguishable according to connection node, then it works, and the tunnel to be used is not limited to the MPLS. For example, even in the case of the employment of an IP tunnel, if it is possible to distinguish between a tunnel for the MH 920 and a tunnel for the MSR 910 on the basis of the header information, then it is useful.

As described above, according to the second embodiment of the present invention, the MAR 910 is made to accommodate a plurality of MHs 920 as a mobile access router without providing a new IP link and transfer a packet between the AR 830 connected to the MAR 910 itself and the MH 920 serving as its own subordinate. Moreover, is designed to manage the connection position (an AR (the fixed AR 830 or the MAR 910) with which the MH 920 is in connection) of the MH 920 and transfer a packet to the MH 920 connected to the MAR 910 through the use of an LSP for the MAR 910.

In addition, since nodes pertaining to subordinates of the access network 800 use the same prefix, in a case in which the MH 920 exists under the access network 800 (when it is connected to the fixed AR 830 or the mobile AR 910), it holds only one CoA, and there is no need to carry out the changing processing on an IP address. Thus, it becomes possible to inhibit the MH 920 connected as a subordinate to the MAR 910 from individually carrying out the mobile processing with respect to the access network 800 side (AR 830 or MAP 810).

Furthermore, unlike the first embodiment of the present invention, according to the second embodiment of the present invention, an edge apparatus in the access network has a router function, and it can identify an IP address and transfer a packet. Moreover, since the layer-2 frame terminates at the ARs 830 and 840 forming edges of the access network 800, a frame is not transferred through the use of an MAC address of the MH 910 within the access network 800. In each AR 830, 840 and each MAR 910, an IP address of the MH 920 in connection is registered and a layer-2 address is generated by an ND (Neighbor Discovery) protocol, thereby carrying out the packet transfer.

### <Third Embodiment>

A description will be given hereinbelow of a third embodiment of the present invention. As well as the above-described second embodiment of the present invention, in the third embodiment of the present invention, a network configuration (the network configuration shown in FIG. 18) is such that the layer 2 terminates at a terminal side edge of the access network 800. The third embodiment of the present invention is identical to the second embodiment of the present invention in the configuration of the access network 800 and in that the fixed AR 830, 840 and MAR 910 connected to the access network 800 notify the same prefix as that of the access network 800.

Although in the above-described second embodiment of the present invention an individual tunnel is used as a tunnel from the MAP 810 to the AR 830 for a terminal (MH 920 or MAR 910) connected to the AR 830, in the third embodiment of the present invention, a tunnel common to the terminals connected to the AR 830 (which will hereinafter be referred to as a common tunnel) is used as the tunnel from the MAP 810 to the AR 830.

In the third embodiment of the present invention, the network configuration and the frame format to be outputted from the MAP 810 are basically the same as those shown in FIGS. 18 and 19. However, since the third embodiment of the present invention employs a common tunnel, the value of a label indicative of the next hop of each terminal is not used unlike the above-described second embodiment of the present invention. Accordingly, in the case of the employment of the common tunnel, difficulty is encountered in determining the next hop transfer destination on the basis of the label value (information inserted into a frame), and the AR 830 positioned at a terminal side edge of the access network 800 cannot manage the next hop transfer destination (that is, whether or not the MH 920 exists as a direct subordinate of the AR 830 or whether or not it exists under the MAR 910).

For this reason, the AR 830 is made such that the next hop can be determined on the basis of only the destination IP address of the received packet, and for realizing this, it holds a table, for example, as shown in FIG. 20. FIG. 20 is an illustration of one example of a transfer-destination management table to be stored in an AR positioned at a terminal side edge of an access network in the third embodiment of the present invention.

For example, as shown in FIG. 20, this transfer-destination management table stores an ID (for example, an IP address) for identifying each terminal (each MH 920 or each MAR 910) and a transfer destination when a frame is transferred to each terminal identified by each ID in a state associated with each other. In Fig. 20, there is shown a transfer-destination registered state in which frames addressed to MH #1 and MAR #1 are sent to IF #1 while a frame addressed to MH #2 is transferred to MAR #1.

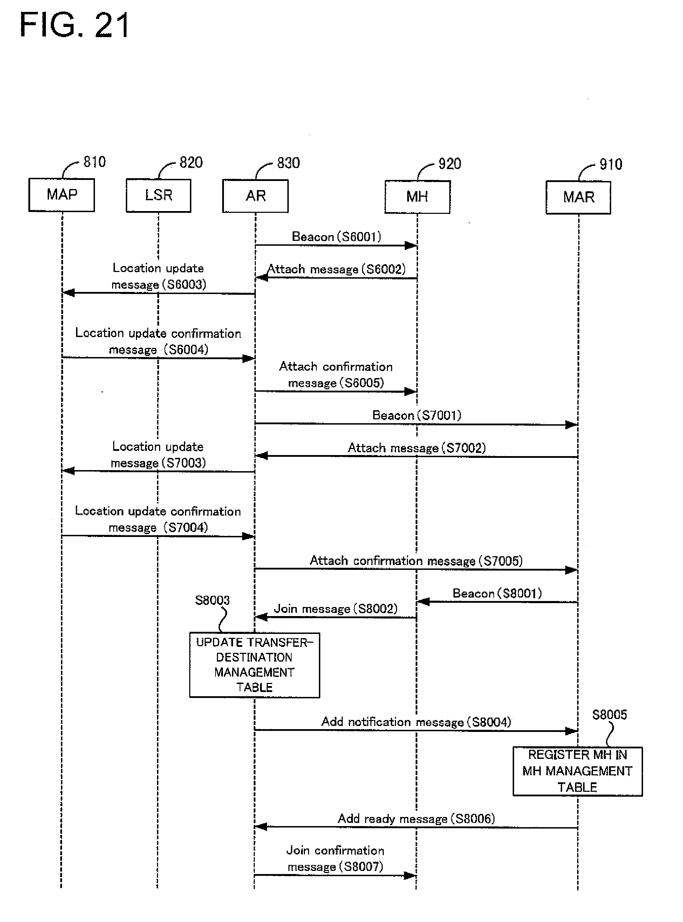

A description will be given hereinbelow of an operation according to the third embodiment of the present invention. FIG. 21 is a sequence chart showing one example of an operation according to the third embodiment of the present invention to be conducted until a soft handover state takes place in a case in which an MH changes the connection from a fixed AR to an MAR. In the sequence chart shown in FIG. 21, a state in which the MH 920 is not in connection with the MAR 910 is taken as an initial state, and in FIG. 21, there is shown the processing to be conducted until the MH 920 reaches a soft handover state.

In FIG. 21, first, the MH 920 moves into a radio communication area of the AR 830, and the MH 920 receives a beacon from the AR 830 (step S6001) and, on the basis of this beacon, transmits a message (Attach message), which is for notifying the fact of the connection with the AR 830, to the MAP 810 (step S6002). Upon receipt of this Attach message, the AR 830 transmits a message (Location update message), which is for notifying the location of the connection of the MH 920, to the MAP 810 (step S6003). This Location update message includes at least the ID of the MH 920 and the ID of the AR 830.

The MAP 810, which has completed the updating of the location registration of the MH 920, transmits a message (Location update confirmation message), which is for notifying the completion of the updating of the location registration, to the AR 830 (step S6004). Although not shown, at this time, the transfer-destination management table of the MAP 810 is updated so that the information to the effect that the MH 920 has directly been connected as a subordinate to the AR 830 is registered in the transfer-destination management table. Moreover, upon receipt of this Location update confirmation message, the AR 830 transmits a message (Attach confirmation message) indicative of the completion of the connection of the MH 920 toward the MH 920 serving as its own subordinate (step S6005).

On the other hand, also with respect to the MAR 910, as well as the above-mentioned processing related to the MH 920, the location registration of the MAR 910 is made through the processing in steps S7001 to S7005. Moreover, through the message interchange in the steps S6001 to S6006 and the message interchange in the steps S7001 to S7005, for example, the information to the effect that the MH 920 and the MAR 910 have been connected as subordinates to the AR 830 is registered in the transfer-destination management table of the AR 830, and the transfer-destination management table is placed into a condition, for example, as shown in FIG. 20.

At this time, the AR 830 refers to the transfer-destination management table so as to determine the transfer destination on the basis of the IP address of the packet received from the interior of the access network 800 and transfer the packet to each MH 920 and each MAR 910 existing as its own subordinates.

In the above-mentioned state, let it be assumed that the MH 920 continuously stays within the radio communication area of the AR 830 and further moves into the radio communication area of the MAR 910. Concretely, for example, it is considered that the radio communication area of the AR 830 is formed in a platform of a railway station, and a user carrying the MH 920 exists within this radio communication area while a train in which the MAR 910 is located enters the platform of the station.

In a case in which the MH 920 has moved into the radio communication area of the MAR 910 (or when the MAR 910 has moved so that the radio communication area thereof covers the position at which the MH 920 exists), the MH 920 becomes capable of receiving a beacon from the MAR 910 (step S8001). The MH 920 can acquire the ID of the MAR 910 from this beacon.

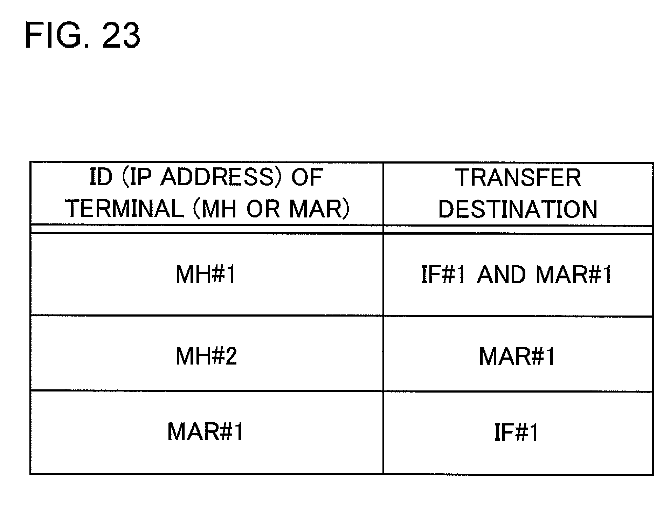

Upon receipt of the beacon from the MAR 910, in the case of the change of the connection to the MAR 910, the MH 920 transmits a message (Join message) including the ID of the MAR 910 to the AR 830 connected directly thereto (step S8002). Upon receipt of this Join message, the AR 830 updates the transfer-destination management table, for example, as shown in FIG. 23 (step S8003).

FIG. 23 is an illustration of one example of a transfer-destination management table in a soft handover state according to the second embodiment of the present invention. As shown in FIG. 23, in a case in which an MH #1 is in a soft handover state, two transfer destinations of IF #1 and MAR #1 are registered as transfer destinations of the MH #1. Moreover, after the time the transfer-destination management table has been updated s shown in FIG. 23, the copying of a packet starts and the copied packet is transferred to two transfer destinations (address to two layer-2 addresses). Thus, the MH 920 can be placed into a soft handover state where a packet is receivable directly from the AR 830 and a packet is receivable from the MAR 910.

Inaddition, theAR830transmits, to the MAR 910, a message (Add notification message) including the ID of the MH 920, which is for notifying that a new MH 920 tries to come under theMAR910 (stepS8004) . When receiving this Add notification message, the MAR 910 grasps that the relevant MH 920 moves under it, and registers the new MH 920 in the transfer-destination management table held by the MAR 910 itself (step S8005). Following this, the MAR 910 returns, to the AR 830, a message (Add ready message) indicative of the completion of the additional registration of the MH 920 in the transfer-destination management table (step S8006). When receiving this Add ready message, the AR 830 transmits, to the MH 920 serving as its own subordinate, a message (Join confirmation message) indicative of the permission of joining an MAR 910 group (step S8007).

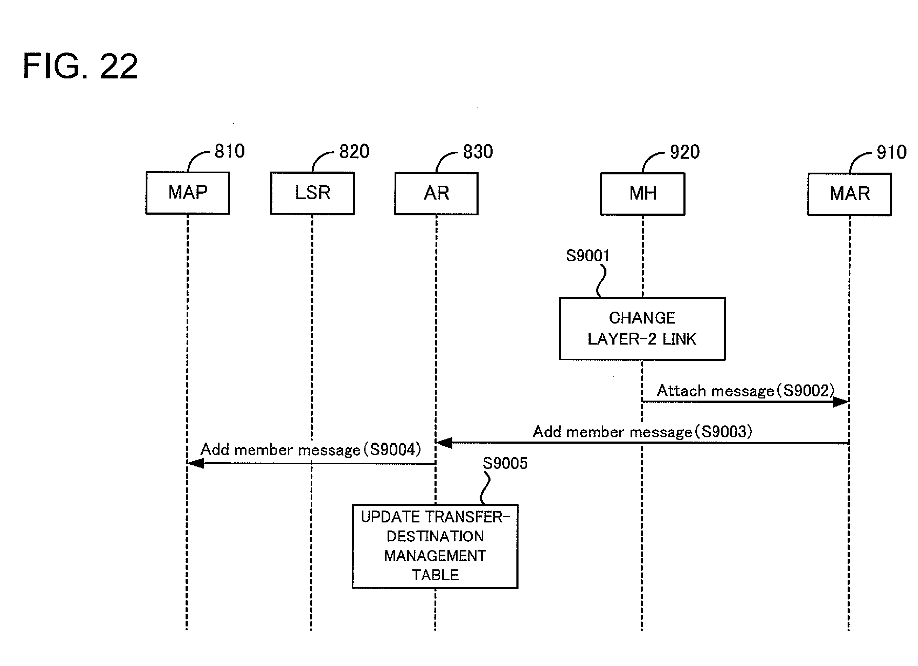

Furthermore, in the above-mentioned soft handover state, a description will be given of a case in which the MH 920 departs from the radio communication area of the AR 830 in which it first existed and moves into the radio communication area of the MAR 920. FIG. 22 is a sequence chart showing one example of an operation to be conducted when an MH in a soft handover state switches the connection to a single base station.

In FIG. 22, concretely, for example, it is considered that a user possessing the MH 920 departs from a platform of a railway station forming a radio communication area of the AR 830 and takes a train forming a radio communication area of the MAR 910. The sequence chart shown in FIG. 22 indicates the processing subsequent to that in FIG. 21. That is, in the sequence chart shown in FIG. 22, a state in which a packet addressed to the MH 920 flows through both the AR 830 and the MAR 910 and the MH 920 is in connection with the AR 830 is taken as an initial condition.

In FIG. 22, in the case of changing the layer-2 link from the AR 830 to the MAR 910 (step S9001), the MH 920 transmits a message (Attach message) indicative of the implementation of the connection to the MAR 910 (step S9002). Upon receipt of this Attach message, the MAR 910 transmits, to the AR 830, a message (Add member message) which is for notifying that the MH 920 establishes a connection with it (step S9003), and the AR 830 transfers the contents of this Add member message to the MAP 810 (step S9004). This Add member message includes at least the ID of the MAR 910 and the ID of the MH 920.

In addition, the AR 830 carries out the update processing on the transfer-destination management table (step S905) . In this case, with respect to the transfer-destination management table, the AR 830 conducts the update processing from a state in which two destinations of IF #1 and MAR #1 are registered as packet transfer destinations for the MH 920 to a state in which only MAR#1 is registered as a packet transfer destination for the MH 920. Thus, the soft handover state in which the packet is copied in the AR 830 and transferred to the two transfer destinations comes to an end.

As described above, according to the third embodiment of the present invention, the apparatus (AR 830, 840) positioned at a terminal side edge of the access network 800 has a transfer-destination update table and manages a soft handover state where a plurality of transfer destinations exist, which enables the frame transmission in the access network 800 through the use of a common tunnel. Moreover, when the apparatus (AR 830, 840) positioned at a terminal side edge of the access network 800 controls whether or not to carry out the frame transmission in the soft handover state, it is possible to eliminate the need for notifying the handover processing by the MH 920 to the apparatus (MAP 810) positioned at a core network side edge of the access network, which enables a reduction of the control packet traffic within the access network 800.

In comparison with the second embodiment of the present invention, although the above-described third embodiment of the present invention employs the concept that an apparatus (AR 830) positioned at a terminal side edge of an access network manages the frame transfer destinations and the soft handover state, likewise, this concept is also applicable to the first embodiment of the present invention. That is, the concept that an apparatus (E-LSR 230) positioned at a terminal side edge of an access network is designed to manage the frame transfer destinations and the soft handover state is also applicable to the first embodiment of the present invention.

Although the descriptions of the first to third embodiments of the present invention relate principally to the operations to be conducted when the MH 320 carries out the handover, the present invention is also applicable to a case in which the MEB 310 conducts the handover. Moreover, even in a case in which a plurality of MEBs are connected in amulti-stage fashion, the present invention is also applicable to this case by extending the above-described first to third embodiments of the present invention.

Moreover, although the descriptions of the first to third embodiments of the present invention relate principally to a case in which the packet transfer is made through the use of EoMPLS in the access network 200, likewise, the present invention is also applicable to a case employing a frame transfer technique using a VLAN (Virtual Local Area Network) in the access network 200 or other frame transfer techniques in arbitrary layer-2 levels.

The respective functional blocks used in the above description of the first to third embodiments of the present invention are typically realized with an LSI (Large Scale Integration) which is an integrated circuit. It is also acceptable that these functional blocks are individually formed as one chip, or that a portion of or all of these functional blocks are formed as one chip. Although an LSI is taken in this case, it is sometimes referred to as an IC (Integrated Circuit), system LSI, super LSI or ultra LSI according to the level of integration.

Moreover, the technique for the formation of an integrated circuit is not limited to the LSI, but it is also realizable with a dedicated circuit or a general-purpose processor. After the manufacturing of the LSI, it is also acceptable to utilize an FPGA (Field Programmable Gate Array) which enables the programming or a reconfigurable processor which allows the reconfiguration of connections and setting of circuit cells in the interior of the LSI.

Still moreover, if a technique for the formation of an integrated circuit replaceable with the LSI appears owing to advance in semiconductor technology or a different technology derived therefrom, the functional blocks can naturally be integrated through the use of this technique. For example, a biotechnology or the like may be applicable.

### INDUSTRIAL APPLICABILITY

The present invention provides an advantage of reducing the packet loss and band consumption for the data transfer when a mobile terminal conducts the handover between a fixed base station and a mobile base station for group movement, and it is applicable to a communication technique and handover technique for realizing efficient communications.

## Claims

1. A mobile communication control method for a mobile communication control system including, in a case in which an access network is formed so that a mobile terminal establishes a connection with a core network, a first edge communication apparatus positioned at an edge of said access network and connected to said core network and a second edge communication apparatus positioned at an edge of said access network and accommodating said mobile terminal, with said mobile terminal accommodated in said second edge communication apparatus being connected through said first edge communication apparatus and said second edge communication apparatus to said core network, comprising:
a mobile base station accommodating step in which said second edge communication apparatus accommodates a mobile base station capable of accommodating a mobile terminal as its own subordinate;
a connection relation grasping step in which said first edge communication apparatus grasps a connection switching start timing and a connection switching end timing by said mobile terminal which switches a connectionbetween said second edge communication apparatus and said mobile base station;
a flag adding step in which, within a period of time between the connection switching start timing and the connection switching end timing by said mobile terminal, said first edge communication apparatus adds a predetermined flag to a data unit transmitted from an arbitrary communication apparatus, connected to said core network, toward said mobile terminal; and
a data unit duplicating step in which, upon receipt of the data unit having the added predetermined flag, said second edge communication apparatus duplicates the data unit and directly transmits one of the data units, obtained by the duplication, to said mobile terminal serving as its own subordinate while transmitting the other duplicated data unit through said mobile base station to said mobile terminal.

2. The mobile communication control method according to claim 1, further comprising an encapsulation step in which said first edge communication apparatus encapsulates the data unit, addressed to said mobile terminal capable of receiving the data unit through said mobile base station, with a header addressed to said mobile base station,
wherein, in said data unit duplicating step, upon receipt of the data unit having the added flag, said second edge communication apparatus duplicates the encapsulated data unit and, after decapsulating one of the duplicated data units, transmits the decapsulated data unit directly to said mobile terminal serving as its own subordinate while transmitting the other duplicated data unit directly to said mobile base station.

3. The mobile communication control method according to claim 1, further comprising a data unit transmitting step in which said first edge communication apparatus transmits the data unit, to which the predetermined flag is added in said flag adding step, through a tunnel whose end point is said mobile base station,
wherein, in said data unit duplicating step, said second edge communication apparatus transfers the data unit having the added predetermined flag and transmitted through said tunnel toward the end point of said tunnel and refers to a destination IP address included in the data unit for transmitting the data unit directly to said mobile terminal serving as its own subordinate.

4. The mobile communication control method according to claim 1, wherein the transfer of the data unit in said access network is made according to a label switching method and, in said access network, the data unit having the added predetermined flag utilizes a path for transfer of a data unit to said mobile base station.

5. The mobile communication control method according to claim 4, wherein, in said flag adding step, the predetermined flag is added to a header for label switching.

6. A mobile communication control method for a mobile communication control system including, in a case in which an access network is formed so that a mobile terminal establishes a connection with a core network, a first edge communication apparatus positioned at an edge of said access network and connected to said core network and a second edge communication apparatus positioned at an edge of said access network and accommodating said mobile terminal, with said mobile terminal accommodated in said second edge communication apparatus being connected through said first edge communication apparatus and said second edge communication apparatus to said core network, comprising:
a mobile base station accommodating step in which said second edge communication apparatus accommodates a mobile base station capable of accommodating a mobile terminal as its own subordinate;
a prefix advertising step in which said second edge communication apparatus advertises a prefix identical to a prefix for specifying said access network to its own subordinate;
a common tunnel transferring step in which, in said access network from said first edge communication apparatus to said second edge communication apparatus, said first edge communication apparatus transfers the data unit, which passes through said second edge communication apparatus, through the same tunnel;
a connection relation grasping step in which said second edge communication apparatus grasps a connection switching start timing and a connection switching end timing by said mobile terminal which switches a connection between said second edge communication apparatus and said mobile base station; and
a data unit duplicating step in which, between the connection switching start timing and the connection switching end timing by said mobile terminal, said second edge communication apparatus duplicates the data unit addressed to said mobile terminal and directly transmits one of the duplicated data units to said mobile terminal serving as a subordinate while transmitting the other duplicated data unit through said mobile base station to said mobile terminal.

7. A data communication device which is in connection with a core network and which is positioned at an edge of an access network for connecting a mobile terminal to said core network, comprising:
positional information storing means for storing information indicative of positional relationship between an edge communication apparatus positioned at an edge of said access network and capable of accommodating said mobile terminal and a mobile terminal existing under said edge communication apparatus or a mobile base station existing under said edge communication apparatus and capable of accommodating said mobile terminal as its own subordinate;
data unit receiving means for receiving a data unit transmitted from an arbitrary communication apparatus, connected to said core network, to said mobile terminal;
flag adding means for referring to the information indicative of the positional relationship stored in said positional information storing unit to add, to the data unit, a predetermined flag indicative of an instruction for a duplication of the data unit to said edge communication apparatus in a case in which said mobile terminal exists at a position where the data unit is receivable from both said edge communication apparatus and said mobile base station; and
data unit transmitting means for transmitting the data unit, to which the predetermined flag is added by said flag adding means, to said edge communication apparatus.

8. The data communication device according to claim 7, further comprising:
mobile base station subordinate judging means for referring to the information indicative of the positional relationship stored in said positional information storing unit so as to make a judgment as to whether or not said mobile terminal exists under said mobile base station; and
encapsulation means for, when the judgment by said mobile base station subordinate judging means shows that saidmobile terminal exists under said mobile base station, making an encapsulation with a header addressed to said mobile base station.

9. The data communication device according to claim 7, wherein said data unit transmitting means is made to transmit the data unit, to which the predetermined flag is added by said flag adding means, through a tunnel whose end point is said mobile base station.

10. The data communication device according to claim 7, further comprising label adding means for, in a case in which the transfer of the data unit within said access network is made according to a label switching method, adding, to the data unit, a label whereby the data unit is transferred to said edge communication apparatus within said access network.

11. A data communication device which is positioned at an edge of an access network for connecting a mobile terminal to a core network and which is capable of accommodating said mobile terminal, comprising:
amobilebase station capable of accommodating saidmobile terminal as its own subordinate or radio communication apparatus accommodating means capable of accommodating said mobile terminal;
data unit receiving means for receiving a data unit from said access network:
data duplicating means for, when receiving a data unit to which the predetermined flag to be added when a judgment shows that said mobile terminal exists at a position where the data unit is receivable from both the edge communication apparatus and said mobile base station is added by a data communication device positioned at an edge of said access network and connected to said core network, duplicating the data unit; and
data unit transmitting means for directly transmitting one of the data units obtained by the duplication by said data duplicating means to said mobile terminal serving as its own subordinate and transmitting the other duplicated data unit to said mobile base station.

12. The data communication device according to claim 11, further comprising decapsulation means for, in a state where the data unit having the added predetermined flag is encapsulated with a header addressed to said mobile base station, carrying out a decapsulation on said header addressed to said mobile base station with respect to one of the data units obtained by the duplication by said data duplicating means.

13. The data communication device according to claim 11, wherein the one data unit duplicated by the data duplicating means is transmitted to a destination address specified by the predetermined flag while the other duplicated data unit is transmitted to a destination address derived from a destination IP address included in the data unit.

14. A mobile base station which is movable and made to carry out the processing on a layer-2 level data unit, comprises:
radio communication means connectable through radio communication to a base station positioned at an edge of an access network for a connection with a core network;
radio communication apparatus accommodating means capable of accommodating a mobile terminal;
decapsulation means for, when receiving, through said radio communication means, an encapsulated data unit made in a manner such that a data unit addressed to saidmobile terminal accommodated in said radio communication apparatus accommodating means is encapsulated with a header addressed to the mobile base station itself, decapsulating the encapsulated data unit; and
data transmitting means for transmitting the data unit, obtained by said decapsulation means and addressed to said mobile terminal, to said mobile terminal.

15. The mobile base station according to claim 14, further comprising beacon transmitting means for transmitting, to a subordinate, a beacon including its own identification information, information indicative of the fact that it is movable and identification information on said base station accommodating it.

16. A mobile terminal which is movable, comprising:
radio communication means connectable through radio communication to a base station;
beacon information judging means for, when newly receiving a beacon from a second base station through the use of the radio communication means in a state accommodated in a first base station, referring to identification information on a base station accommodating said second base station, included in the beacon received from said second base station, and making a judgment as to whether or not said first base station and said second base station are identical to each other; and
message transmitting means for, when the judgment in said beacon information judging means shows that said first base station and said second base station are identical to each other, transmitting, to said first base station, a message including its own identification information and identification information on said second base station as a request for allowing a data unit addressed to the mobile terminal to be duplicated in said first base station and receivable from both said first base station and said second base station.
